Europäisches Patentamt

European Patent Office

Office européen des brevets

(19)

(11) Publication number: **0 123 499**
**B1**

(12) **EUROPEAN PATENT SPECIFICATION**

(45) Date of publication of patent specification: **30.01.91**

(51) Int. Cl.⁵: **G 01 C 19/64**

(21) Application number: **84302598.2**

(22) Date of filing: **17.04.84**

(54) Improved fiber optic rotation sensor with extended dynamic range.

(30) Priority: **25.04.83 US 488111**
**25.04.83 US 488155**

(43) Date of publication of application:
**31.10.84 Bulletin 84/44**

(45) Publication of the grant of the patent:
**30.01.91 Bulletin 91/05**

(84) Designated Contracting States:
**AT BE CH DE FR GB IT LI LU NL SE**

(56) References cited:
**WO-A-82/03456**
**GB-A-2 108 652**
**US-A-4 372 685**

**FIRST INTERNATIONAL CONFERENCE ON
OPTICAL FIBRE SENSORS, 26th - 28th April
1983, London, GB, pages 136-137; B.Y. KIM et
al.: "Harmonic feed-back approach to fiber gyro
scale factor stabilization"**

(73) Proprietor: **THE BOARD OF TRUSTEES OF THE
LELAND STANFORD JUNIOR UNIVERSITY
Encina 105 Stanford University
Stanford California 94305 (US)**

(72) Inventor: **Lefevre, Herve C.
Thomson-CSF Domaine de Corbeville BP 10
F-94401 Orsay (FR)**
Inventor: **Kim, Byoung Yoon
48-c Escondido Village
Stanford California 94305 (US)**

(74) Representative: **Rushton, Ronald et al
SOMMERVILLE & RUSHTON 11 Holywell Hill
St. Albans Hertfordshire AL1 1EZ (GB)**

Courier Press, Leamington Spa, England.

## Description

Background of the invention

The present invention relates to rotation sensors, such as gyroscopes, and particularly to a fiber optic rotation sensor which has an extended dynamic range.

Fiber optic rotation sensors typically comprise a loop of fiber optic material to which light waves are coupled for propagation around the loop in opposite directions. Rotation of the loop creates a relative phase difference between counter-propagating waves, in accordance with the well known "Sagnac effect", with the amount of phase difference corresponding to the velocity of rotation. The counter-propagating waves, when recombined, interfere constructively or destructively to produce an optical output signal which varies in intensity in accordance with the rotation rate of the loop. Rotation sensing is commonly accomplished by detection of this optical output signal.

Various techniques have been devised to increase the sensitivity of fiber optic rotation sensors to small rotation velocities. However, these techniques do not work for very large rotation velocities because the output functions tend to repeat themselves at various velocities of rotation such that it cannot be determined from the output signal which of the possible rotation velocities which have the same output signal waveform is responsible for the particular output signal waveform observed.

The present invention provides a way to extend the dynamic range of the fiber optic gyroscope to larger rotational velocities.

Summary of the invention

The rotation sensor comprises all fiber optic components, such as a fiber optic directional coupler which (a) splits the light from the source into two waves that propagate around the sensing loop in opposite directions, and (b) combines the counter-propagating waves to provide an optical output signal. Proper polarization of the applied light, the counter-propagating waves, and the optical output signal is established, controlled, and maintained by a fiber optic polarizer and fiber optic polarization controllers. A second fiber optic coupler is provided to couple the optical output signal from the continuous strand to a photodetector which outputs an electrical signal that is proportional to the intensity of the optical signal.

Improved operating stability and sensitivity of the rotation sensor is achieved by phase modulating the counter-propagating waves at a first harmonic frequency using a first phase modulator and utilizing a synchronous or phase sensitive detection system to measure the first harmonic component of the optical output signal intensity. In the detection system disclosed, the amplitude of this first harmonic component is proportional to the rotation rate of the loop.

The improvements in the detection system which result in extended dynamic range include the use of a second phase modulator to phase modulate the counter-propagating light signals at another frequency which is the second harmonic of the first frequency and a feedback loop to control the amplitude of the second harmonic phase modulation. A feedback error signal is generated by a phase sensitive detector which comprises a photodetector and a lock-in amplifier. This feedback signal is proportional to the amplitude of the first harmonic component in the output signal from the photodetector. A feedback error correction modulator controls the amplitude of the second harmonic driving signal to the second phase modulator in accordance with the feedback error signal so as to cancel or limit the amplitude of the first harmonic component in the optical output signal caused by the Sagnac phase shift.

A further improvement comprises storing in a memory, rotation rate data related by a transfer function to the amplitude of the second harmonic phase modulation that cancels the first harmonic component in the optical output signal caused by rotation. The "cancellation" amplitude of the second harmonic that is sufficient to cancel or limit the first harmonic caused by the Sagnac effect is then converted to the rotation rate by accessing the memory using the amplitude of the cancellation signal as the address. The rotation rate data so accessed can then be used directly or converted into a signal which can be interpreted to derive the Sagnac phase shift or the velocity of rotation.

It has been found that amplitude modulation in odd harmonics of the optical output signal, caused by the phase modulator (either directly or indirectly, through polarization modulation), may be eliminated by operating the phase modulator at a specific frequency. Since the detection system utilized detects only an odd harmonic (e.g., the first harmonic), the effects of phase modulator induced amplitude modulation may be eliminated by operating at such frequency. This eliminates a significant source of error in rotation sensing, and thereby increases the accuracy of the rotation sensor.

Brief description of the drawings

These and other advantages of the present invention are best understood with reference to the drawings in which:

Figure 1 is a schematic drawing of the basic rotation sensor used in the present invention showing the fiber optic components positioned along a continuous, uninterrupted strand of fiber optic material, and further showing the signal generator, photodetector, lock-in amplifier, and display associated with the detection system;

Figure 2 is a sectional view of one embodiment of a fiber optic directional coupler for use in the rotation sensor of Figure 1;

Figure 3 is a sectional view of one embodiment of a fiber optic polarizer for use in the rotation sensor of Figure 1;

Figure 4 is a perspective view of one embodiment of a fiber optic polarization controller for use in the rotation sensor of Figure 1;

Figure 5 is a schematic diagram of the rotation sensor of Figure 1 with the polarizer, polarization controllers, and phase modulator removed therefrom;

Figure 6 is a graph of the intensity of the optical output signal, as measured by the photodetector, as a function of the rotationally induced Sagnac phase difference, illustrating the effects of birefringence induced phase differences and birefringence induced amplitude fluctuations;

Figure 7 is a graph of phase difference as a function of time showing the phase modulation of each of the counter-propagating waves and the phase difference between the counter-propagating waves;

Figure 8 is a schematic drawing illustrating the effect of the phase modulation upon the intensity of the optical output signal, as measured by the detector, when the loop is at rest;

Figure 9 is a schematic drawing showing the effect of the phase modulation upon the intensity of the optical output signal as measured by the detector when the loop is rotating;

Figure 10 is a graph of the amplifier output signal as a function of the rotationally induced Sagnac phase difference, illustrating an operating range for the rotation sensor of Figure 1;

Figure 11 is a diagram of the preferred embodiment of a closed loop rotation sensor with extended dynamic range;

Figure 12 is a diagram of the overall phase shift resulting from the first and second harmonic phase modulation and the optical output signal which results therefrom;

Figure 13 is a circuit diagram for an error correction modulator;

Figure 14 is a diagram of the response of the modulator of Figure 13 to a sample error signal;

Figure 15 is a diagram of the preferred error correction modulator;

Figure 16 is a schematic diagram of the overall sensor using the error correction modulator of Figure 15;

Figure 17 is a diagram of another error correction modulator which could be used in the closed loop embodiment of Figure 11;

Figure 18 is a graph of the transfer function of the rotation sensor;

Figure 19 is a graph of the overall phase shift for first and second harmonic phase modulation and small rotation rates;

Figure 20 is a graph of the transfer function of the sensor for small rotation rates;

Figure 21 is a diagram of the preferred embodiment of an output circuit for the rotation sensor for converting the amplitude of the second harmonic driving signal to the rotation rate;

Figure 22 is a diagram of an output display circuit which could be used in linear regions of the transfer function;

Figure 23 is a diagram of another output display circuit which could be used in linear regions of the transfer function; and

Figure 24 is a diagram of an open loop embodiment of the extended range rotation sensor.

Detailed description of the preferred embodiment

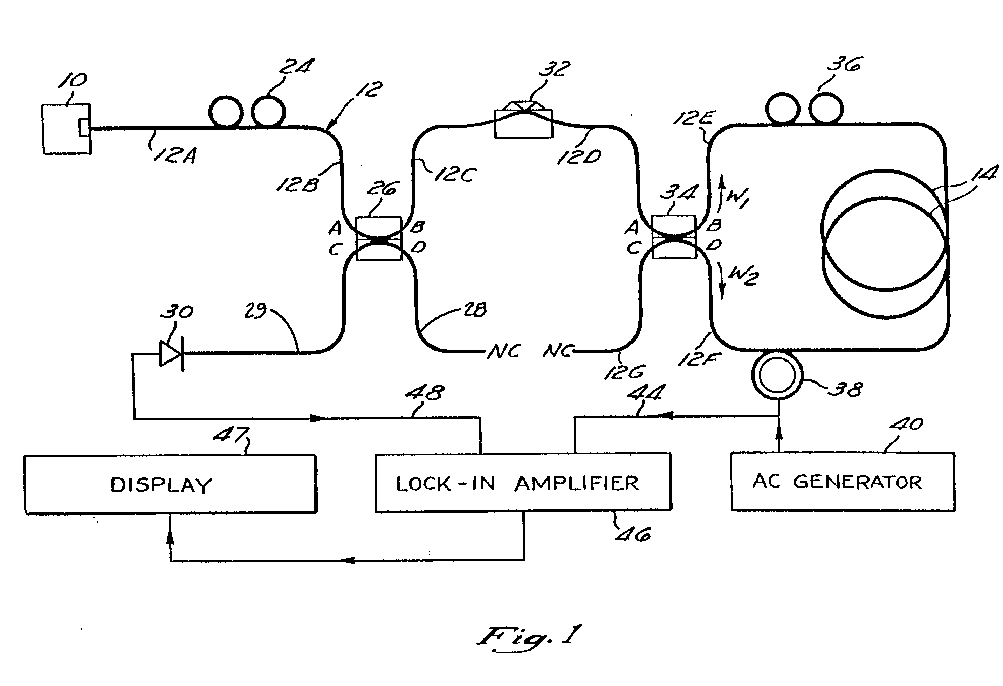

Before proceeding with a discussion of the preferred embodiment of the invention, a discussion of the basic rotation sensor used in the invention is necessary for fuller understanding of the improvement. Figure 1 shows a rotation sensor such as is used in the present invention. It includes a light source 10 for introducing light into a continuous length or strand of optical fiber 12, a portion of which is wound into a sensing loop 14. As used herein, the reference numeral 12 designates generally the entire continuous strand of optical fiber, while the numeral 12 with letter suffixes (A, B, C, etc.) designates portions of the optical fiber 12.

In the embodiment shown, the light source 10 comprises a galium arsenide (GaAs) laser which produces light having a wave length on the order of 0.82 microns. By way of specific example, the light source 10 may comprise a model GO-DIP laser diode, commercially available from General Optronics Corp., 3005 Hadley Road, South Plainfield, New Jersey. The fiber optic strands such as the strand 12 are preferably single mode fibers having, for example, an outer diameter of 80 microns and a core diameter of 4 microns. The loop 14 comprises a plurality of turns of the fiber 12 wrapped about a spool or other suitable support (not shown). By way of specific example, the loop 14 may have approximately 1000 turns of fiber wound on a form having a diameter of 14 centimeters.

Preferably, the loop 14 is wound symmetrically, starting from the center, so that symmetrical points in the loop 14 are in proximity. It is believed that this reduces the environmental sensitivity of the rotation sensor, since such symmetry causes time varying temperature and pressure gradients to have a similar effect on both of the counter-propagating waves.

Light from the source 10 is optically coupled to one end of the fiber 12 by butting the fiber 12 against the light source 10. Various components for guiding and processing the light are positioned or formed at various locations along the continuous strand 12. For the purpose of describing the relative locations of these components, the continuous fiber 12 will be described as being divided into seven portions, labeled 12A through 12G, respectively, with the portion 12A through 12E being on the side of the loop 14 that is

3

coupled to the source 10, and the portions 12F and 12G being on the opposite side of the loop 14.

Adjacent to the light source 10, between the fiber portions 12A and 12B, is a polarization controller 24. A type of polarization controller suitable for use as the controller 24 is described in detail in co-pending patent application Serial No. 183,975 filed September 4, 1980, entitled "Fiber Optic Polarization Converter", assigned to the assignee of the present invention, and is hereby incorporated by reference. A brief description of the polarization controllers 24 will be provided subsequently. However, it should be presently understood that this controller 24 permits adjustment of both the state and direction of polarization of the applied light.

The fiber 12 then passes through ports labeled A and B of a directional coupler 26, located between the fiber portions 12B and 12C. The coupler 26 couples optical power to a second strand of optical fiber which passes through the ports labeled C and D of the coupler 26, the port C being on the same side of the coupler as the port A, and the port D being on the same side of the coupler as the port B. The end of the fiber 28 extending from the port D termintes non-reflectively at the point labeled "NC" (for "not connected") while the end of the fiber 29 extending from the port C is optically coupled to a photodetector 30. By way of specific example, the photodetector 30 may comprise a standard, reverse biased, silicon, PIN-type, photo diode. The coupler 26 is described in detail in co-pending patent application Serial No. 300,955, filed September 10, 1981, entitled "Fiber Optic Directional Coupler" which is a continuation-in-part of patent application Serial No. 139,511, filed April 11, 1980, entitled "Fiber Optic Directional Coupler", both of said patent applications being assigned to the assignee of the present invention. These copending patent applications are hereby incorporated by reference.

The fiber portion 12C extending from port B of the coupler 26 passes through a polarizer 32, located between the fiber portions 12C and 12D. A monomode optical fiber has two polarization modes of travel for any light wave. The polarizer 32 permits passage of light in one of the polarization modes of the fiber 12, while preventing passage of light in the other polarization mode. Preferably, the polaization controller 24 mentioned above is used to adjust the polarization of the applied light so that such polarization is substantially the same as the polarization mode passed by the polarizer 32. This reduces the loss of optical power as the applied light propagates through the polarizer. A preferred type of polarizer for use in the present invention is described in detail in co-pending patent application Serial No. 195,934, filed October 10, 1980, entitled "Polarizer and Method", assigned to the assignee of the present invention, and is hereby incorporated by reference.

After passing through the polarizer 32, the fiber 12 passes through ports labeled A and B of a directional coupler 34, located between the fiber portions 12D and 12E. This coupler 34 is preferably of the same type as described above in reference to the coupler 26. The fiber 12 is then wound into the loop 14, with a polarization controller 36 located between the loop 14 and fiber portion 12E. This polarization controller 36 may be of the type discussed in reference to the controller 24, and is utilized to adjust the polarization of the light waves counter-propagating through the loop 14 so that the optical output signal, formed by interference of these counter-propagating waves, has a polarization which will be efficiently passed by the polarizer 32 with minimal optical power loss. Thus, by utilizing both the polarization controllers 24 and 36, the polarization of the light propagating through the fiber 12 may be adjusted for maximum optical power output.

A phase modulator 38 driven by an AC signal generator 40 is mounted in the fiber segment 12F between the loop 14 and the second directional coupler 34. This modulator 38 comprises a PZT cylinder, around which the fiber 12 is wrapped. The fiber 12 is bonded to the cylinder so that when it expands radially in response to the modulating signal from the generator 40, it stretches the fiber 12. An alternative type of modulator (not shown), suitable for use with the present invention, comprises a PZT cylinder which longitudinally stretches four segments of the fiber 12 bonded to short lengths of capillary tubing at the ends of the cylinder. Those skilled in the art will recognize that this alternative type of modulator may impart a lesser degree of polarization modulation to the propagating optical signal than the modulator 38; however, it will be seen subsequently that the modulator 38 may be operated at a frequency which eliminates the undesirable effects of polarization modulation. Thus, either type of modulator is suitable for use in the present invention.

The fiber 12 then passes through ports labeled C and D of the coupler 34, with the fiber portion 12F extending from the port D and the fiber portion 12G extending from the port C. Fiber portion 12G terminates non-reflectively at a point labeled "NC" (for "not connected"). The output signal from the AC generator 40 is supplied on a line 44 to a lock-in amplifier 46 as a reference signal, which lock-in amplifier 46 also is connected to receive the output of the photodetector 30 by a line 48. This signal on the line 44 to the amplifier 46 provides a reference signal for enabling the amplifier 46 to synchronously detect the detector output signal at the modulation frequency, i.e., the first harmonic component of the optical output signal, of the modulator 38 while blocking all other harmonics of this frequency.

Lock-in amplifiers are well known in the art and are commercially available.

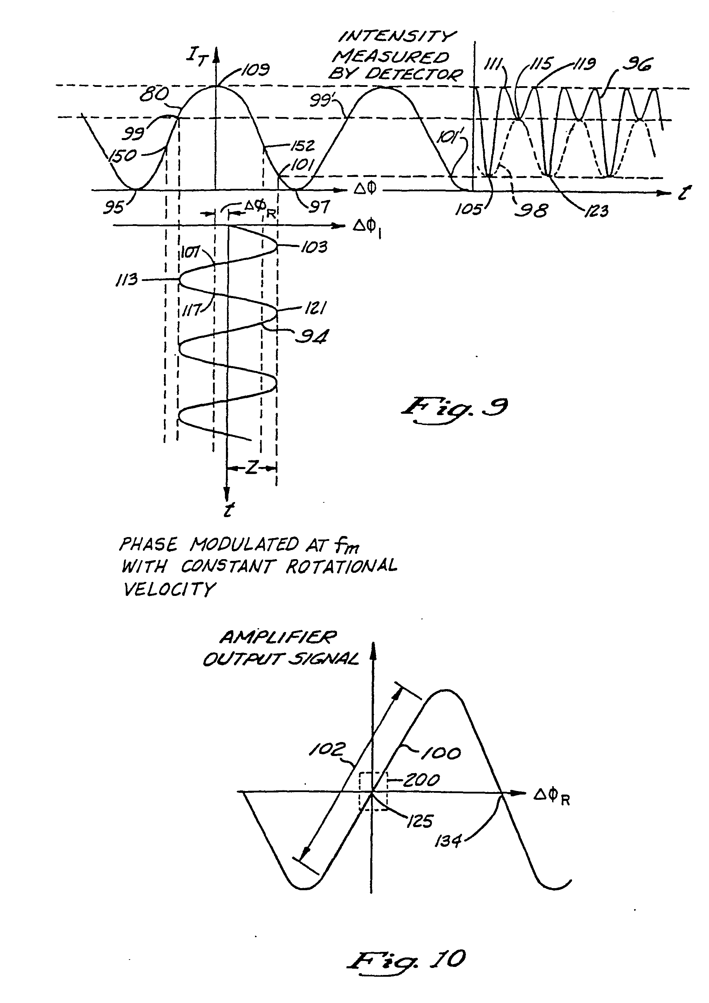

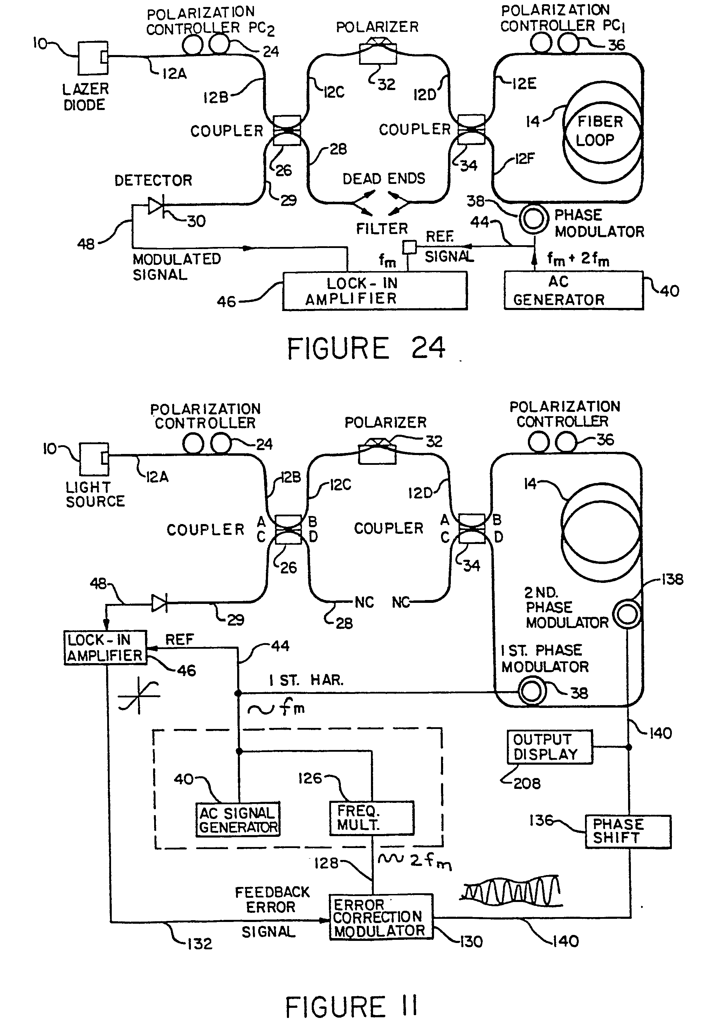

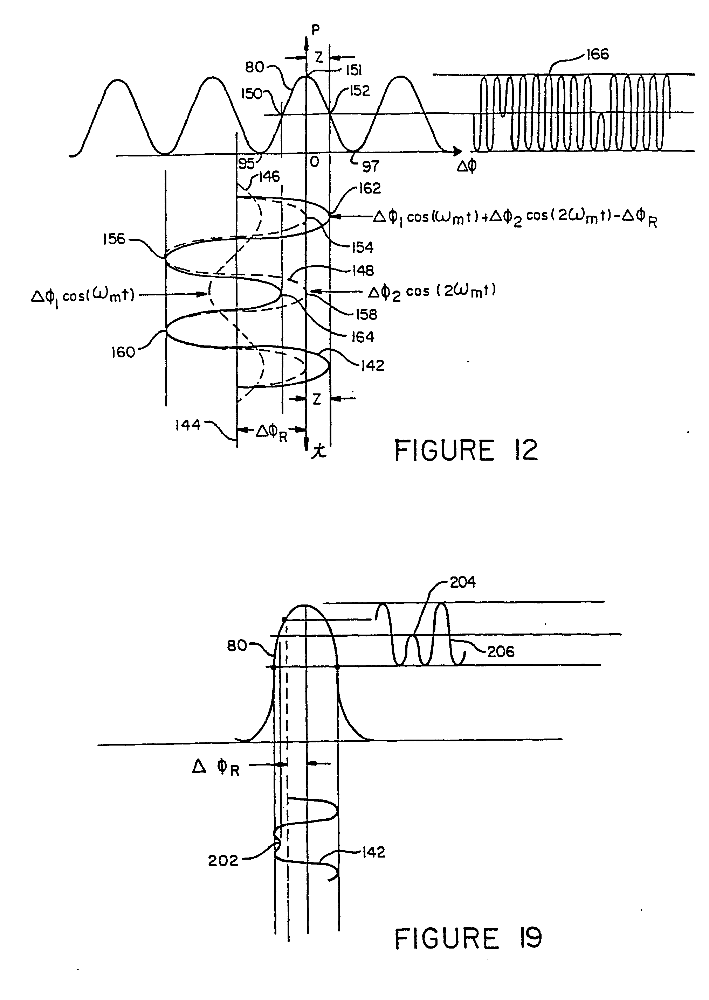

It will be seen below that the magnitude of the first harmonic component of the detector output signal is proportional through a certain limited operating range to the rotation rate of the loop 14. The amplifier 46 outputs a signal which is proportional to this first harmonic component, and thus provides a direct indication of the rotation rate, which may be visually displayed on a display panel 47. However, the scheme of detection shown in Figure 1 can only be used for relatively small rotation rates as will be seen in connection with the discussion of Figure 9.

The couplers 26 and 34

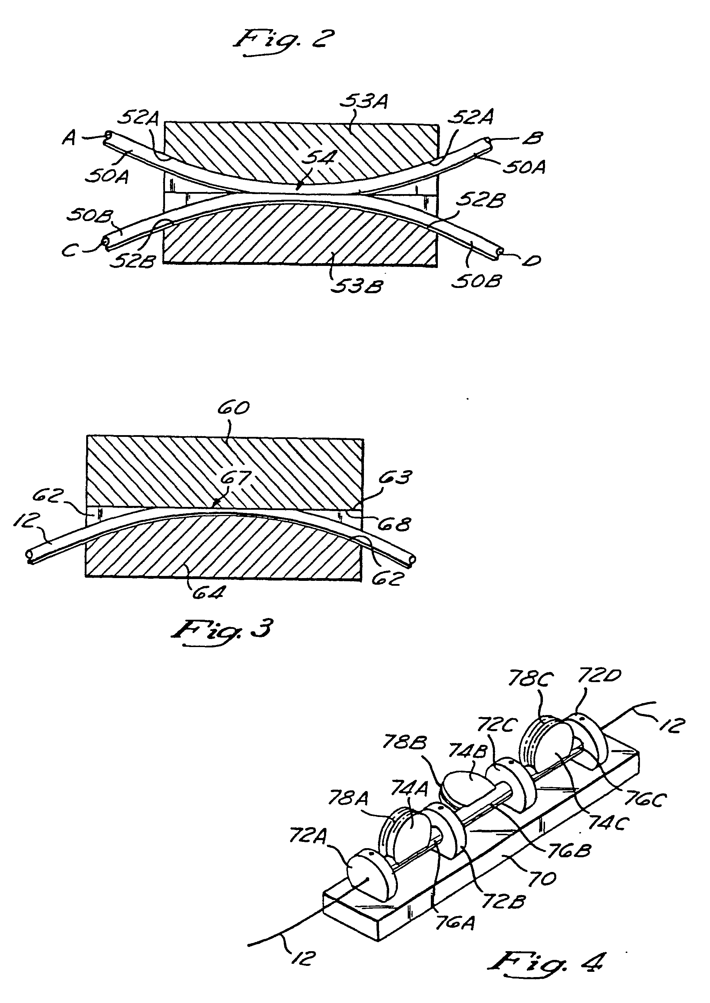

A preferred fiber optic directional coupler for use as the couplers 26 and 34 in the rotation sensor or gyroscope of the present invention is illustrated in Figure 2. The coupler comprises two optical fiber strands labeled 50A, 50B in Figure 2, of a single mode fiber optic material having a portion of the cladding removed from one side thereof. The two strands 50A and 50B are mounted in respective arcuate slots 52A and 52B, formed in respective blocks 53A and 53B. The strands 50A and 50B are positioned with the portions of the stands where the cladding has been removed in close spaced relationship, to form a region of interaction 54 in which the light is transferred between the core portions of the strands. The amount of material removed is such that the core portion of each strand 50A and 50B is within the evanescent field of the other. The center-to-center spacing between the strands at the center of the coupler is typically less than about 2—3 core diameters.

It is important to note that the light transferred between the strands at the region of interaction 54 is directional. That is, substantially all of the light applied to input port A is delivered to the output ports B and D, without contra-directional coupling to port C. Likewise, substantially all of the light applied to input port C is delivered to the output ports B and D. Further, this directivity is symmetrical. Thus, light supplied to either input port B or input port D is delivered to the output ports A and C. Moreover, the coupler is essentially non-discriminatory with respect to polarizations, and thus preserves the polarization of the coupled light. Thus, for example, if a light beam having a vertical polarization is input to port A, the light coupled from port A to port D, as well as the light passing straight through from port A to port B, will remain vertically polarized.

From the foregoing, it can be seen that the coupler may function as a beam-splitter to divide the applied light into two counter-propagating waves W1, W2 (Figure 1). Further, the coupler may additionally function to recombine the counter-propagating waves after they have traversed the loop 14 (Figure 1).

In the embodiment shown, each of the couplers 26, 34 has a coupling efficiency of fifty percent, as this choice of coupling efficiency provides maximum optical power at the photodetector 30 (Figure 1). As used herein, the term "coupling efficiency" is defined as the power ratio of the coupled power to the total output power, expressed as a percent. For example, referring to Figure 2, if light is applied to port A, the coupling efficiency would be equal to the ratio of the power at port D to the sum of the power output at ports B and D. Further, a coupling efficiency of 50% for the coupler 34 insures that the counter-propagating waves W1, W2 are equal magnitude.

The polarizer 32

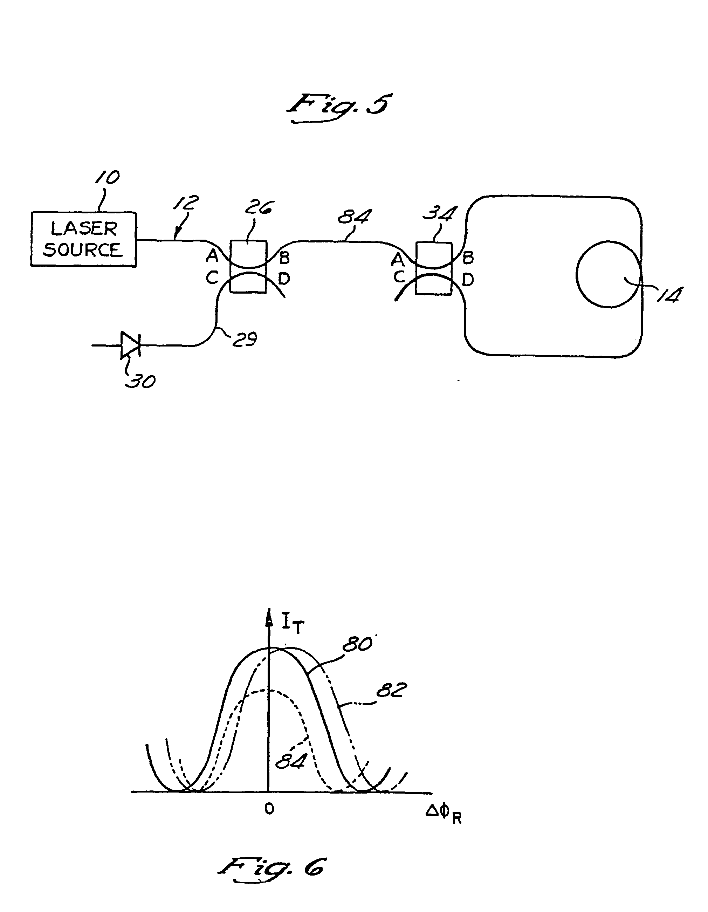

A preferred polarizer for use in the rotation sensor of Figure 1 is illustrated in Figure 3. This polarizer includes a birefringent crystal 60, positioned within the evanescent field of light transmitted by the fiber 12. The fiber 12 is mounted in a slot 62 which opens to the upper face 63 of a generally rectangular quartz block 64. The slot 62 has an arcuately curved bottom wall, and the fiber is mounted in the slot 62 so that it follows the contour of this bottom wall. The upper surface 63 of the block 64 is lapped to remove a portion of the cladding from the fiber 12 in a region 67. The crystal 60 is mounted on the block 64, with the lower surface 68 of the crystal facing the upper surface 63 of the block 64, to position the crystal 60 within the evanescent field of the fiber 12.

The relative indices of refraction of the fiber 12 and the birefringent material 60 are selected so that the wave velocity of the desired polarization mode is greater in the birefringent crystal 60 than in the fiber 12, while the wave velocity of an undesired polarization mode is greater in the fiber 12 than in the birefringent crystal 60. The light of the desired polarization mode is coupled from the fiber 12 to the birefringent crystal 60, whereas light of the undesired polarization mode is guided by the core portion of the fiber 12, whereas light of the undesired polarization mode is coupled from the fiber 12 to the birefringent crystal 60. Thus, the polarizer 32 permits passage of light in one polarization mode, while preventing passage of light in the other polarization mode. As previously indicated, the polarization controllers 24, 36 (Figure 1) may be utilized to adjust the polarizations of the applied light and optical output signal, respectively, so that optical power loss through the polarizer is minimized.

The polarization controllers 24, 36

One type of polarization controller suitable for use in the rotation sensor of Figure 1 is illustrated in Figure 4. The controller includes a base 70 on which a plurality of upright blocks 72A through 72D are mounted. Between adjacent ones of the blocks 72, spools 74A through 74C are tangentially mounted on shafts 76A through 76C, respectively. The shafts 76 are axially aligned with each other, and are rotatably mounted between the blocks 72. The spools 74 are generally cylindrical and are positioned tangentially to the shafts 76. The strand 12 extends through axial bores in the shafts 76 and is wrapped about each of the spools 74 to form three coils 78A through 78C. The radii of the coil 78 are such that the fiber 12 is stressed to form a birefringent medium in each of the coils 78. The three coils 78A through 78C may be rotated independently of each other about the axis of the shafts 74A through 74C respectively to adjust the birefringence of the fiber 12 and, thus, to control the polarization of the light passing through the fiber 12.

The diameter and number of turns in the coils 78 are such that the outer coils 78A and C provide a spatial delay of one-quarter wave length, while the central coil 78D provides a spatial delay of one-half wave length. The quarter wave length coils 78A and C control the elipticity of the polarization, and the half wave length coil 78 controls the direction of polarization. This provides a full range of adjustment of the polarization of the light propagating through the fiber 12. It will be understood, however, that the polarization controller may be modified to provide only the two quarter wave coils 78A and C, since the direction of polarization (otherwise provided by the central coil 78B) may be controlled indirectly through proper adjustment of the elipticity of polarization by means of the two quarter wave coils 78A and C. Accordingly, the polarization controllers 24 and 36 are shown in Figure 1 as including only the two quarter wave coils 78A and C. Since this configuration reduces the overall size of the controllers 24—36, it may be advantageous for certain applications of the present invention involving space limitations.

Thus, the polarization controllers 24 and 36 provide means for establishing, maintaining and controlling the polarization of both the applied light and the counter-propagating waves.

## Operation without phase modulation or polarization control

In order to fully understand the function and importance of the polarizer 32 (Figure 1) and phase modulator 38, the operation of the rotation sensor will first be described as if these components had been removed from the system. Accordingly Figure 5 shows the rotation sensor of Figure 1 in schematic block diagram form, with the modulator 38, polarizer 32, and associated components removed therefrom.

Light is coupled from the laser source 10 to the fiber 12 for propagation therein. The light enters port A of the coupler 26, where a portion of the light is lost through port D. The remaining portion of the light propagates from port B to port A of the coupler 34, where it is split into two counter-propagating waves W1, W2 of equal amplitude. The wave W1 propagates from the port B in a clockwise direction about the loop 14, while the wave W2 propagates from port D in a counter-clockwise direction around the loop 14. After the waves W1, W2 have traversed the loop 14, they are recombined by the coupler 34 to form an optical output signal, which propagates from port A of the coupler 34 to port B of the coupler 26. A portion of the optical output signal is coupled from port B to port C of the coupler 26 for propagation along the fiber 29 to the photodetector 30. This photodetector 30 outputs an electrical signal which is proportional to the intensity of the light impressed thereon by the optical output signal.

The intensity of the optical output signal will vary in accordance with the amount and type, i.e., constructive or destructive, of interference between the waves W1, W2 when they are recombined or interferred at the coupler 34. Ignoring, for the moment, the effects of fiber birefringence, the waves W1, W2 travel the same optical path around the loop 14. Thus, assuming the loop 14 is at rest, when the waves W1, W2 are recombined at the coupler 34, they will interfere constructively, with no phase difference therebetween, and the intensity of the optical output signal will be at a maximum. However, when the loop 14 is rotated, the counter-propagating waves W1, W2, will be shifted in phase in accordance with the Sagnac effect, so that when they are superposed at the coupler 34, they destructively interfere to reduce the intensity of the optical output signal. Such Sagnac phase difference between the waves W1, W2, caused by rotation of the loop 14, is defined by the following relationship:

$$\Delta\phi_R = \frac{8 \ \pi NA}{\lambda c} \ \Omega \tag{1}$$

where:
A is the area bounded by the loop 14 of optical fiber;
N is the number of turns of the optical fiber about the area A;
$\Omega$ is the angular velocity of the loop about an axis which is perpendicular to the plane of the loop; and
$\lambda$ and c are the free space values of the wave length and velocity, respectively, of the light applied to the loop.

The intensity of the optical output signal ($I_T$) is a function of the Sagnac phase difference ($\Delta\phi_R$) between the waves W1, W2, and is defined by the following equation:

$$I_T = I_1 + 2 \ \sqrt{I_1 I_2} \ \cos(\Delta\phi_R) \tag{2}$$

where $I_1$ and $I_2$ are the individual intensities of the waves W1, W2, respectively.

From equations (1) and (2) it may be seen that the intensity of optical output signal is a function of the rotation rate ($\Omega$). Thus, an indication of such rotation rate may be obtained by measuring the intensity of the optical output signal, utilizing the detector 30.

Figure 6 shows a curve 80, which illustrates this relationship between the intensity of the optical output signal ($I_T$) and the Sagnac phase difference ($\Delta\phi_R$) between the counter-propagating waves W1, W2. The curve 80 has the shape of a cosine curve, and the intensity of the optical output signal is at a maximum when the Sagnac phase difference is zero. Where the phase difference between the counter-propagating waves W1, W2 is caused entirely by rotation of the loop 14, the curve 80 will vary symmetrically about the vertical axis. However, as discussed in copending patent application Serial No. 288,212, filed July 29, 1981,

6

with polarized light an additional, non-reciprocal, phase difference between the counter-propagating waves W1, W2 may be caused by the residual birefringence of the optical fiber 12. This application is hereby incorporated by reference. This additional non-reciprocal phase difference will not occur if completely unpolarized light is used. Birefringence induced phase differences occur because light traveling in each of the two polarization modes of the single mode fiber 12 travels at a different velocity. Birefringence will cause coupling of part of the light traveling one polarization mode into the other mode. This creates a non-rotationally induced phase difference between the waves W1, W2, which causes the waves W1, W2 to interfere in a manner that distorts or shifts the curve 80 of Figure 6. Such a shift is illustrated by the curve 82, shown in phantom lines in Figure 6. Such birefringence induced, non-reciprocal phase difference is indistinguishable from a rotationally induced Sagnac phase difference, and is dependent on environmental factors which vary fiber birefringence, such as temperature and pressure. Thus, fiber birefringence is the cause of a major source of error in fiber optic rotation sensors.

Operation with the polarizer 32

The problem of non-reciprocal operation due to fiber birefringence is solved in the rotation sensor of the present invention by means of the polarizer 32 (Figure 1) which, as discussed above, permits utilization of only a single polarization mode. When the polarizer 32 is introduced into the system at the point designated by the reference numeral 84 in Figure 5, light passing through the polarizer 32 propagates into the loop 14 in one selected polarization mode. Further, when the counter-propagating waves are recombined to form the optical output signal, any light that is not of the same polarization as the light applied to the loop is prevented from reaching the photodetector 30, since the optical output signal passes through the polarizer 32. Thus, the optical output signal, as it travels from port A of coupler 34 to port B of coupler 26, will have precisely the same polarization as the light applied to the loop.

Therefore, by passing the input light and optical output signal through the same polarizer 32, only a single optical path is utilized, thereby eliminating the problem of birefringence induced phase difference caused by the different velocities of propagation in the two possible polarization modes. That is, by filtering out all light which is transferred from the selected mode to the unselected mode by the birefringence in the fiber, it is possible to eliminate all light waves in the unselected mode which might gain or lose phase relative to the selected mode because of the different velocity of propagation. Further, it should be noted that the polarization controllers 24, 36 (Figure 1) may be used to adjust the polarization of the applied light, and optical output signal, respectively, to reduce optical power loss at the polarizer 32, and thus, maximize the signal intensity at the detector 30.

Operation with the phase modulator 38

Referring again to Figure 6, it will be seen that, because the curve 80 is a cosine function, the intensity of the optical output signal is nonlinear for small Sagnac phase differences ($\Delta\phi_R$) between the waves W1, W2. Further, the optical output signal intensity is relatively insensitive to changes in phase difference, for small values of $\Delta\phi_R$. Such nonlinearity and insensitivity makes it difficult to transform the optical intensity ($I_T$) measured by detector 30 into a signal indicative of the rate of rotation of the loop 14 (via equation 1).

Further, although birefringence induced phase differences between the waves W1, W2 are eliminated, as discussed above by use of the polarizer 32, nevertheless cross coupling between polarization modes caused by fiber birefringence occurs. This cross coupling reduces the optical intensity of the optical output signal since the cross coupled light is prevented from reaching the photodetector 30 on the polarizer 32. Thus, changes in fiber birefringence cause the amplitude of the curve 80 of Figure 6 to vary, for example, as illustrated by the curve 84. It will be understood that curves 80, 82, 84 of Figure 6 are not drawn to scale.

The foregoing problems are solved by means of a synchronous detection system utilizing the phase modulator 38, signal generator 40 and lock-in amplifier 46 shown in Figure 1.

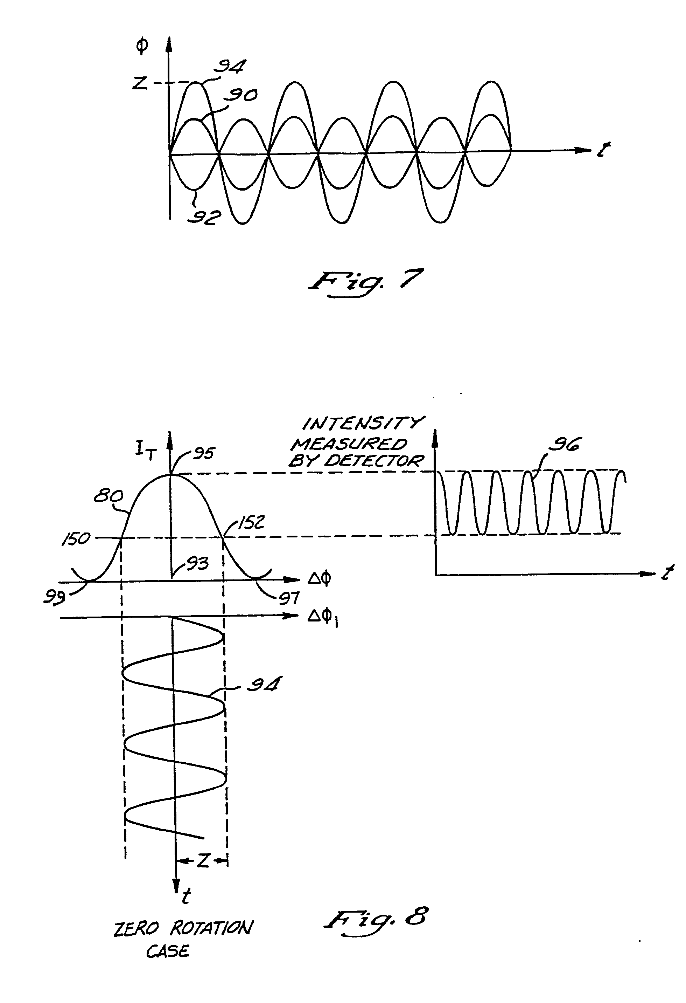

Referring to Figure 7, the phase modulator 38 modulates the phase of each of the propagating waves W1, W2 at the frequency of the signal generator 40. However, as may be seen from Figure 1, the phase modulator 38 is located at one end of the loop 14. Thus, the modulation of the wave W1 is not necessarily in phase with the modulation of the wave W2. Indeed, it is preferable for proper operation of this synchronous detection system that the modulation of the waves W1, W2 be 180° out of phase. Referring to Figure 7, it is preferable that the modulation of the wave W1, represented by the sinusoidal curve 90, be 180° out of phase with the modulation of the wave W2, represented by the curve 92. Use of a modulation frequency which provides such 180° phase difference between the modulation of the wave W1 relative to that of W2 is particularly advantageous in that it eliminates modulator induced amplitude modulation in the optical output signal measured by the detector 30. This modulation frequency ($f_m$) may be calculated using the following equation:

$$f_m = \frac{c}{2n_{eq}L} \tag{3}$$

where:

L is the differential fiber length between the coupler 34 and the modulator 38 for the counter- propagating waves W1, W2, i.e., the distance, measured along the fiber, between the modulator 38 and a symmetrical point on the other side of the loop 14;

$n_{eq}$ is the equivalent refractive index for the single mode fiber 12; and

c is the free space velocity of the light applied to the loop 14.

At this modulation frequency ($f_m$) which is called the "proper" frequency, the phase difference ($\Delta\phi_1$) between the counter-propagating waves W1, W2, stemming from phase modulation of these waves in accordance with the curves 90 and 92, is illustrated by the sinusoidal curve 94 in Figure 7. The curve 94 is obtained by subtracting the curve 92 from the curve 90 to obtain the phase difference between W1 and W2. This modulation of the phase difference between the waves W1, W2 will also modulate the intensity ($I_T$) of the optical output signal in accordance with the curve 80 of Figure 6 just as a Sagnac phase shift would, since such phase modulation $\Delta\phi_1$ is indistinguishable from rotationally induced Sagnac phase differences $\Delta\phi_R$.

The foregoing may be understood more fully through reference to Figures 8 and 9 which graphically illustrate the effect of (a) the phase modulation $\Delta\phi_1$, defined by the curve 94 of Figure 7, and (b) the Sagnac phase difference $\Delta\phi_R$, upon the intensity ($I_T$) of the optical output signal. Before proceeding with a discussion of Figures 8 and 9, it should first be understood that the intensity ($I_T$) of the modulated optical output signal is a function of the total phase difference between the waves W1, W2. Such total phase difference is comprised of both the rotationally induced Sagnac phase difference $\Delta\phi_R$ and the time varying modulation induced phase difference $\Delta\phi_1$. The total phase difference $\Delta\phi$ between the waves W1, W2 may be expressed as follows:

$$\Delta\phi=\Delta\phi_R+\Delta\phi_1 \tag{4}$$

Accordingly, since the effects of the modulation induced phase difference $\Delta\phi_1$, as well as the rotationally induced phase difference $\Delta\phi_R$ will be considered in reference to Figures 8 and 9, the horizontal axis for the curve 80 has been relabeled as $\Delta\phi$ to indicate that the total phase difference is being considered, rather than only the rotationally induced phase difference, as in Figure 6.

Referring now to Figure 8, the effect of the phase modulation $\Delta\phi_1$ (curve 94) upon the intensity $I_T$ of the optical output signal will be discussed. Curve 80 represents the relationship between the intensity of the optical output signal resulting from two interfering coherent waves to the phase difference $\Delta\phi$ between the waves. When the relative phase angle between them is zero, as illustrated at 93, the resultant intensity of the combined wave is a maximum, as illustrated at 95. When the relative phase between the waves W1 and W2 is non-zero, the combined optical signal will have a lower intensity depending upon the magnitude of the phase difference $\Delta\phi$. The intensity continues to decrease with increasing $\Delta\phi$ until the relative phase difference is either plus or minus 180°, as illustrated at 97 and 99 respectively. At a phase difference of plus or minus 180°, the two counter-propagating waves completely destructively interfere, and the resultant intensity is zero as illustrated at 97 and 99.

In Figure 8, it is assumed that the loop 14 is at rest, and thus, the optical signal is not affected by the Sagnac effect. Specifically, it may be seen that the modulation induced phase difference curve 94 causes the optical output signal to vary as illustrated by the curve 96. The curve 96 is obtained by translating the points on the curve 94, representing the instantaneous phase difference $\Delta\phi_1$ between W1 and W2 onto the curve 80 representing the resultant optical intensity for a phase difference of that magnitude. When all the points on the curve 94 are translated onto the curve 80, and the corresponding intensities are plotted, the curve 96 results. The translation of the curve 94 through the curve 80 is symmetrical about the vertical axis of the curve 80, so that the optical intensity measured by the detector 30 varies periodically at a frequency equal to the second harmonic of the modulating frequency, as shown by the curve 96. Since, as discussed above, the lock-in amplifier 46 is tuned by the reference signal at the modulation frequency $f_m$ from the signal generator 40 (Figure 1), the lock-in amplifier synchronously detects only the detector output signal at the modulation frequency $f_m$, i.e., first harmonic, of the modulator 38. But since the detector output signal is at the second harmonic of the modulation frequency, as shown by the curve 96, the output signal from the amplifier 46 will be zero and the display 47 will indicate a rotation rate of zero.

It should be noted that even if birefringence induced amplitude fluctuations occur in the optical output signal, as discussed in reference to the curve 84 of Figure 6, the curve 96 of Figure 8 will remain at a second harmonic frequency. Thus, such birefringence induced amplitude fluctuations will not affect the amplifier 46 output signal. The detection system thus far described therefore provides a substantially more stable operating point that is insensitive to changes in birefringence.

When the loop 14 is rotated, the counter-propagating waves W1, W2 are shifted in phase, as discussed above, in accordance with the Sagnac effect. The Sagnac phase shift provides a constant phase difference $\Delta\phi_R$ for a constant rotational velocity. This Sagnac phase shift adds to the phase difference $\Delta\phi_1$ created by the modulator 38, so that the entire curve 94 is translated in phase from the position shown in Figure 8, by an amount equal to $\Delta\phi_R$, as shown in Figure 9. This causes the optical output signal to vary nonsymmetrically along the curve 80 between the points 99 and 101. This causes an optical output signal as illustrated by curve 96.

The points on the curve 96 are derived as follows. The combined phase difference, illustrated at 103 on curve 94, translates through the point 101 on the curve 80 to the point 105 on the curve 96. The point 107 on the curve 94 translates through the point 109 on the curve 80 to a point 111 on the curve 96. Likewise, the point 113 translates through the point 99 to the point 115, and the point 117 translates through the point 109 to the point 119. Finally, the point 121 translates through the point 101 to the point 123.

The optical output signal 96 has a first harmonic component as illustrated in phantom lines of the sinusoidal curve 98. The peak amplitude of the first harmonic component 98 need not, however, exactly match the amplitude of the optical output signal at point 115 although it might in some cases.

It will be seen subsequently that the RMS value of this sinusoidal curve 98 is proportional to the sine of the rotationally induced Sagnac phase difference $\Delta\phi_R$. Since the amplifier 46 synchronously detects signals having the fundamental frequency of the modulator 38, the amplifier 46 will output a signal that is proportional to the RMS value of the curve 98. This signal can be used to indicate the rotation rate of the loop.

The drawings of Figure 9 illustrate the intensity wave form of the optical output signal for one direction of rotation (e.g., clockwise) of the loop 14. However, it will be understood that, if the loop 14 is rotated in the opposite direction (e.g., counter-clockwise) at an equal velocity, the intensity wave form 96 of the optical output signal will be exactly the same as illustrated in Figure 9, except that it will be translated so that the curve 98 is shifted 180° from the position shown in Figure 9. The lock-in amplifier 46 detects this 180° phase difference for the curve 98, by comparing the phase of the first harmonic 98 with the phase of the reference signal from the signal generator 40, to determine whether the rotation of the loop is clockwise or counter-clockwise. Depending on the direction of rotation, the amplifier 46 outputs either a positive or negative signal to the display 47. However, regardless of the direction of rotation, the magnitude of the signal is the same for equal rates of rotation of the loop 14.

The waveform of the amplifier output signal is shown in Figure 10 as the curve 100. It will be seen that this curve 100 is sinusoidal and varies positively or negatively from the zero rotation rate output voltage, illustrated at 125, depending on whether the rotation of the loop 14 is clockwise or counter-clockwise. Further, the curve 100 has a substantially linear portion 102 which varies symmetrically about the origin and provides a relatively wide operating range for measuring rotation. Moreover, the slope of the curve 100 provides excellent sensitivity through its linear operating range 102 to small Sagnac phase shifts.

Thus, by utilizing the synchronous detection system, the above-described problems of nonlinearity, insensitivity to small Sagnac phase shifts, and birefringence induced amplitude fluctuations are reduced or eliminated for rotation rates of the loop 14 which keep the points 99 and 101 in Figure 9 somewhere on the curve 80 between the points 97 and 95.

A further advantage of the detection system thus far disclosed relates to the fact that state of the art phase modulators, such as the modulator 38, induce amplitude modulation in the optical output signal, either directly or indirectly, through polarization modulation, i.e., the phase modulator also shifts some of the light passing therethrough to the unselected polarization mode. However, it will be recalled from the discussion in reference to Equation (3) that, by operating at a specific or "proper" frequency at which the phase difference between the modulation of the waves W1 and W2 is 180°, the odd harmonic frequency components of this amplitude modulation, that are induced in each of the counter-propagating waves W1, W2 by the modulator 38, cancel each other when the waves are superposed to form the optical output signal. Thus, since the above-described detection system detects only an odd harmonic, i.e., the fundamental frequency, of the optical output signal, the effects of the undesired amplitude modulation are eliminated. Therefore, by operating at the specific frequency defined by Equation (3), and by detecting only an odd harmonic of the optical output signal, the rotation sensor of the present invention may operate independently of modulator induced amplitude and polarization modulation.

A further benefit of operating at the proper frequency is that even harmonics of the phase modulation, induced by the modulator 38 in each of the counter-propagating phase W1, W2, cancel when these waves are superposed to form the optical output signal. Since these even harmonics may, by superposition, produce spurious odd harmonics in the optical signal which might otherwise be detected by the detection system, their elimination improves the accuracy of rotation sensing.

In addition to operating the phase modulator 38 at the frequency defined by Equation (3), it is also preferable to adjust the magnitude of the phase modulation so that the amplitude of the detected first harmonic of the optical output signal intensity is maximized, since this provides improved rotation sensing sensitivity and accuracy. It has been found that the first harmonic of the optical output signal intensity is at the maximum, for a given rotation rate, when the amplitude of the modulator induced phase difference $\Delta\phi_1$ between the waves W1, W2, indicated by the dimension labeled Z in Figures 7, 8, and 9, is 1.84 radians. This may be understood more fully through reference to the following equation for the total intensity ($I_T$) of two superposed waves having individual intensities of $I_1$ and $I_2$, respectively, with a phase difference $\Delta\phi$ therebetween.

9

$$I_T = I_1 + I_2 + 2\sqrt{I_1 I_2}\cos(\Delta\phi) \tag{5}$$

where:

$$\Delta\phi = \Delta\phi_R + \Delta\phi_1 \tag{6}$$

and

$$\Delta\phi_1 = Z\sin(2\pi f_m t). \tag{7}$$

Thus,

$$\Delta\phi = \Delta\Phi_R + Z\sin(2\pi f_m t) \tag{8}$$

The Fourier expansion of cosine $(\Delta\phi)$ is:

$$\cos\Delta\phi = \cos(\Delta\phi_R)\left\{J(z) + 2\sum_{n=1}^{\infty} J_{2n}(z)\cos[2\pi(2nf_m t)]\right\}$$

$$+ \sin(\Delta\phi_R)\left\{2\sum_{n=1}^{\infty} J_{2n-1}(z)\sin[2\pi(2n-1)f_m t]\right\} \tag{9}$$

where $J_n(z)$ is the $n^{th}$ Bessel function of the variable z, and z is the peak amplitude of the modulator induced phase difference between the waves W1, W2.

Therefore, detecting only the first harmonic of $I_T$ yields:

$$I_{T(1)} = 4\sqrt{I_1 I_2}\, J_1(z)\sin(\Delta\phi_R)\,\sin(2\pi f_m t) \tag{10}$$

Thus, the amplitude of the first harmonic of the optical output signal intensity is dependent upon the value of the first Bessel function $J_1(z)$. Since $J_1(z)$ is a maximum when z equals 1.84 radians, the amplitude of the phase modulation should preferably be selected so that the magnitude (z) of the modulator induced phase difference $\Delta\phi_1$ between the waves W1, W2 is 1.84 radians.

Reducing the effects of backscatter

As is well known, present state-of-the-art optical fibers are not optically perfect, but have imperfections such as density fluctuations in the basic material of the fiber. These imperfections cause variations in the refractive index of the fiber which causes scattering of small amounts of light. This phenomena is commonly referred to as Rayleigh scattering. Although such scattering causes some light to be lost from the fiber, the amount of such loss is relatively small, and therefore, is not a major concern. The principal problem associated with Rayleigh scattering relates not to scattered light which is lost, but rather to light which is reflected so that it propagates through the fiber in a direction opposite to its original direction of propagation. This is commonly referred to as "backscattered" light. Since such backscattered light is coherent with the light comprising the counter-propagating waves W1, W2, it can constructively or destructively interfere with such propagating waves, and thereby cause variation in the intensity of the optical output signal, as measured by the detector 30.

The portion of backscattered light from one wave which will be coherent with the counter-propagating wave is that which is scattered within a coherence length of the center of the loop 14. Thus, by reducing the coherence length of the source, the coherence between the backscattered light and the counter-propagating waves is reduced. The remaining portion of the backscattered light will be incoherent with the counter-propagatinig wave, and thus, the interference therebetween will vary randomly so that it is averaged. Therefore, this incoherent portion of the backscattered light will be of substantially constant intensity, and consequently, it will not cause significant variations in the intensity of the optical output signal. Accordingly, in the present invention, the effects of backscatter are reduced by utilizing as the light source 10, a laser having a relatively short coherence length, for example, one meter or less. By way of specific example, the light source 10 may comprise the model GO-DIP laser diode, commercially available from General Optronics Corp., as mentioned above.

An alternative method of prohibiting destructive or constructive interference between the backscattered waves and the propagating waves involves the inclusion of an additional phase modulator in the system at the center of the fiber loop 14. This phase modulator is not synchronized with the modulator 38.

The propagating waves will pass through this additional phase modulator one time only, on their travel around the loop. For backscatter which occurs from a propagating wave before the wave reaches the additional modulator, the backscatter will not be phase modulated by this additional modulator, since neither its source propagating wave nor the backscatter itself has passed through the additional modulator.

On the other hand, for backscatter which occurs from a propagating wave after the wave passes through this additional phase modulator, the backscatter will be effectively twice phase modulated, once when the propagating wave passed through the additional phase modulator, and once when the backscatter passed through the additional modulator.

Thus, if the additional phase modulator introduces a phase shift of $\phi(t)$, the backscattered wave originating at any point except at the center of the loop 14 will have a phase shift of either zero, or $2\phi(t)$, either of which is time varying with respect to the $\phi(t)$ phase shift for the propagating wave. This time varying interference will average out over time, effectively eliminating the effects of the backscatter.

In yet another alternative method of prohibiting destructive or constructive interference from backscatter, the additional phase modulator, not synchronized with the modulator 38, may be introduced at the output of the light source 10.

In this case, backscatter occurring at any point other than the center of the loop 14 will have a different optical path length from the light source 10 to the detector 30 than does the propagating wave from which the backscatter originated.

Thus, the propagating wave will traverse the loop 14 one time, while the backscattered wave and the propagating wave from which it originated will have traversed a portion of the loop 14 twice. If this portion is not one-half of the loop, the path lengths differ.

Because the path lengths differ, a propagating wave which reaches the detector 30 will have been generated at the source 10 at a different time than a backscattered wave which reaches the detector 30 simultaneously.

The phase shift introduced by the additional phase modulator at the source 10 introduced a phase shift $\phi(t)$ relative to the propagating wave, but a phase shift of $\phi(t+K)$ to the backscattered wave, where K is the time difference between the passage of the waves through the modulator. Since $\phi(t+K)$ is time varying with respect to $\phi(t)$, the backscattered interference will average out over time, effectively eliminating the effects of the backscatter.

Extended dynamic range detection system

The detection system described above with reference to Figures 1—10 is a very effective rotation sensing system within a certain range of rotational velocities for the loop 14. However, the dynamic range is limited by certain phenomena. Referring to Figure 9, it can be seen that the curve 80 is periodic. Therefore, if a large rotation rate causes a large enough $\Delta\phi_R$ to move the curve 94 past either the point 97 or the point 95, then the function 96 could repeat itself for a second, higher rotation rate. This second rotation rate would be substantially greater than the rotation rate which caused the Sagnac phase shift $\Delta\phi_R$ depicted in Figure 9, but would be indistinguishable from the lower velocity using the output optical signal 96. That is, if the $\Delta\phi_R$ from some larger rotational velocity were sufficiently large to move the curve 94 so as to operate between two new points 99' and 101' on the second lobe of the curve 80, then the output optical signal 96 would be indistinguishable in such a case from the case shown where the curve 94 operates between the points 99 and 101.

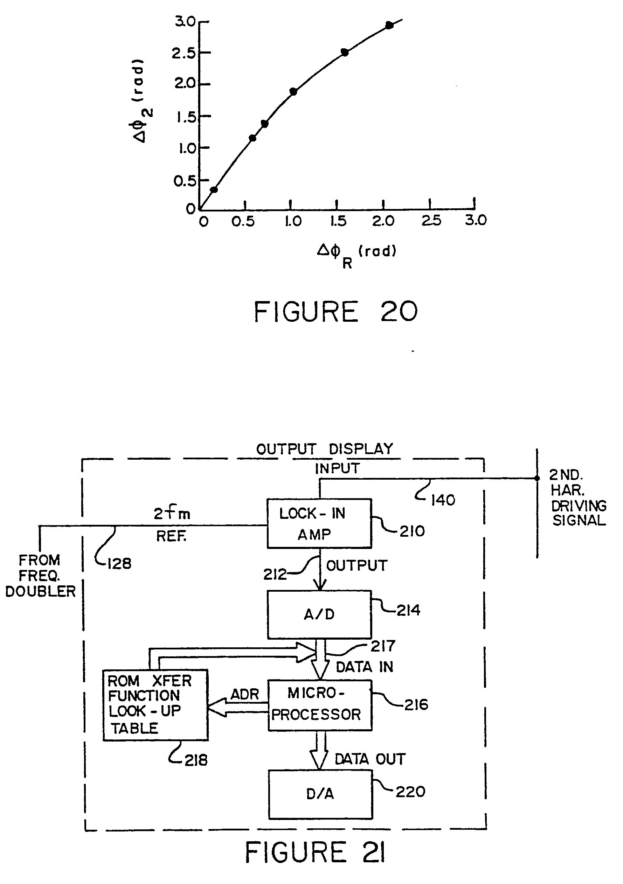

To extend the range of detection, a second harmonic phase modulation scheme can be used. This apparatus is shown in Figure 24 for an open loop configuration and in Figure 11 for a closed loop configuration.

Referring to Figure 11 there is shown a diagram of the preferred closed loop embodiment of the detection system invention. All the like numbered components between Figures 11 and 1 have the same structure and function in Figure 11 as they had in Figure 1. The circuit of Figure 11 differs from that of Figure 1 in that it includes a feedback loop which utilizes the lock-in amplifier output represented by the curve 100, as a feedback signal which controls the driving voltage on second phase modulator 138 in the loop 14. The second phase modulator 138 produces a first harmonic signal in the optical output signal which cancels the first harmonic signal 98 generated by rotation of the loop 14, so that the lock-in amplifier output is driven toward zero, regardless of the loop rotation rate. Accordingly, the lock-in amplifier output in the circuit of Figure 11 provides an error signal for the feedback loop, and thus, will be referred to subsequently as a "feedback error signal". A detailed discussion of the structure and function of the feedback circuit of Figure 11 is provided below. From that discussion, it will become apparent that the feedback circuit of Figure 11 provides an extended dynamic range of rotation sensing, and that such rotation sensing is accomplished through measurement of the driving voltage on the second phase modulator 138. In Figure 11 a single AC generator 40 is shown to generate the first harmonic driving signal on the line 44 for the first harmonic phase modulator 38. A frequency doubler 126 receives the first harmonic driving signal on the line 44 and doubles its frequency to produce a second harmonic component on a line 128.

The second harmonic signal on the line 128 is coupled to the input of an error correction modulator circuit 130. This correction modulator 130 receives the feedback error signal on a line 132 from the output of the lock-in amplifier 46. As in Figure 1, the lock-in amplifier receives the output signal from the photodetector 30 on the line 48 and a reference signal on the line 44. In this case, the reference signal on the line 44 is the first harmonic signal output from the AC signal generator 40. The error signal generated by the lock-in amplifier 46 on the line 132 is proportional to the amplitude of the Fourier component of the input signal on the line 48 which matches the frequency of the reference signal on the line 44. This error signal will lie somewhere on the curve 100 of Figure 10. In this particular case, the error signal will be some D.C. level on the curve 100 for a fixed rotation rate resulting in a fixed amplitude of the first harmonic component on the input line 48. If the amplitude of the first harmonic component changes, the D.C. level of the error signal will change as the operating point shifts along the curve 100.

As explained previously, the curve 100 is periodic because the curve 80 in Figure 9 is periodic. Therefore, the magnitude of the first harmonic component of the optical output signal 96 will vary periodically as increasing Sagnac phase shifts push the total phase shift curve 94 out into other lobes of the curve 80. That is, the point 134 (Figure 10) on the curve 100 represents a situation where the Sagnac phase shift has pushed the curve 94 out far enough so that maxima and minima of the total resultant phase shift curve translate through symmetrically balanced points on the second lobe of the curve 80. The resultant output waveform 96 would look like the output optical signal 96 depicted in Figure 8 for the zero rotation rate case and would have no first harmonic component. Because the waveform 96 has no first harmonic component in this situation, the output of the lock-in amplifier would be zero despite the fact that the rotation rate is non-zero.

The detection system of the invention solves this problem by adding a periodic phase modulation which has a frequency greater than that of the first harmonic phase modulation, which in the preferred embodiment is a harmonic of the first harmonic, preferably the second harmonic, and which has an amplitude sufficient to cause a first harmonic component in the optical output signal which is approximately equal in amplitude to the first harmonic component caused by the Sagnac phase shift but 180° out of phase with it. This second frequency of phase modulation thus cancels substantially all the rotationally caused first harmonic component in the optical output signal.

The function of converting the feedback error signal on the line 132 into a cancellation amplitude for the second harmonic phase modulation, i.e., a second harmonic drive signal of sufficient amplitude to cancel the first harmonic component in the optical output, is performed by the error correction modulator 130, the phase shifter 136 and the second harmonic phase modulator 138.

The error correction modulator 130, upon receiving a non-zero error signal on the line 132, receives the second harmonic signal on the line 128 and increases or decreases its amplitude in response to the magnitude and sign of the error signal so that the magnitude of the error signal on the line 132 is reduced to zero or to within a predetermined range of zero. When the predetermined level for the error signal on the line 132 is reached, the modulator 130 holds the level of the second harmonic steady at the amplitude which causes that zero or small value for the error signal until the error signal again changes. Upon a change in the error signal, the modulator 130 again changes the amplitude of the second harmonic driving signal on the line 140 until the error signal on the line 132 is again reduced to zero or to within a predetermined range of zero.

That is, the error correction modulator 130 uses the feedback error signal on the line 132 to adjust the amplitude of the second harmonic driving signal on the line 140. This second harmonic driving signal has a frequency which is twice that of the first harmonic driving signal and its phase is shifted relative to the first harmonic phase modulation drive waveform by the phase shift circuit 136. The phase is shifted such that the maxima and minima of the second harmonic waveform correspond in time to the maxima, minima and zero crossings of the first harmonic phase modulation drive waveform. Further, the amplitude of the second harmonic phase modulation waveform is set by the correction modulator 130 to the level of drive which will cause cancellation of the first rotationally induced harmonic component in the optical output signal resulting from the Sagnac phase shift. This will be better understood by examination of Figure 12.

Figure 12 shows a graphical relationship between the total resultant relative phase shift between the counter-propagating waves W1 and W2 resulting from the loop rotation and from the phase modulators 38 and 138. The corresponding optical output signal for this overall phase shift is also shown. The resultant or total phase shift curve 142 represents the sum of the Sagnac phase shift $\Delta\phi_R$ (represented by the constant bias 144 for a constant rotational velocity) and the sinusoidally time-varying, first harmonic phase shift $\Delta\phi_1$ cos $(\omega_m t)$, (represented by the curve 146), and the sinusoidally time-varying, second harmonic phase shift $\Delta\phi_2$ cos $(2\omega_m t)$, (represented by the curve 148). The resultant phase shift $\Delta\phi$ is $\Delta\phi_1$ cos $(\omega_m t) + \Delta\phi_2$ cos $(2\omega_m t) - \Delta\phi_R$.

It can be seen from Figure 12 that the magnitude $\Delta\phi_1$ of the first harmonic phase shift of the curve 146 is equal to the quantity Z between the vertical axis p and one of the balanced operating points 150 or 152. It can also be seen that the mangitude $\Delta\phi_2$ of the second harmonic phase shift curve 148 is approximately equal to the magnitude of the Sagnac phase shift $\Delta\phi_R$. When these two conditions are true, and the second harmonic phase shift curve 148 is shifted in phase such that its peaks at 154, 156, 158 and 160 coincide in time with the maxima and minima and zero crossings of the first harmonic phase shift curve 146, certain things will be true about the combined or resultant phase shift and the optical output signal. The most important thing that will be true is the peaks 162 and 164 of the resultant phase shift curve 142 will correspond approximately to phase shifts represented by the symmetrically balanced points 150 and 152 on the curve 80. The points 150 and 152 are symmetrically balanced around the vertical axis p in that each is equidistant from the p axis and each is at the same location on the curve 80 relative to the peak 151. When the points on the resultant phase shift curve 142 are mapped through the curve 80, the resultant output

12

light signal has the intensity versus time waveform shown by a curve 166. Because the curve 166 has no first harmonic component, the error signal on the line 132 from the lock-in amplifier 46 will be zero since the lock-in amplifier filters out all components but the first harmonic component at the frequency $f_m$. The detector 30 puts out an electrical signal proportional to the light intensity curve 166 and therefore this electrical signal on the line 48 also has no first harmonic component.

If the first harmonic phase shift curve did not have an amplitude equal to the quantity Z in Figure 12, or if the second harmonic component 148 did not have an amplitude approximately equal to $\Delta\phi_R$, the peaks 162 and 164 of the resultant phase shift would not approximately represent balanced, symmetrically located phase shifts at the points 150 and 152. This would result in an output light signal 166 that did not look like the curve 166 and which would have a Fourier first harmonic component. For the detection system of Figure 11, the AC signal generator 40 is adjusted such that the amplitude $\Delta\phi_1$ of the first harmonic driving signal on the line 44 remains steady at the quantity Z in Figure 12 and the frequency is maintained at the "proper" frequency as described above. The amplitude Z is chosen as 1.84 radians as previously described. Therefore, if the amplitude $\Delta\phi_2$ of the second harmonic driving signal on the line 140 is adjusted so that it approximately matches the Sagnac phase shift $\Delta\phi_R$ and a phase shifter 136 is placed in the line 140 and adjusted such that the peaks 154, 156, 158, and 160 of the second harmonic phase shift curve 148 coincide in time with the maxima, minima and zero crossings of the first harmonic curve 146, then the resultant phase shift curve will be as shown by the curve 142 in Figure 12. The result will be a substantial cancellation of the first harmonic component in the output optical signal 166 introduced by the Sagnac phase shift $\Delta\phi_R$. This cancellation is caused by the introduction of a first harmonic component phase shift of equal magnitude and frequency but 180° out of phase with the Sagnac effect first harmonic Fourier component by the action of the second harmonic phase modulator 138. That is, the curve 166 will have two sinusoidal first harmonic components of intensity variation in its Fourier series at the frequency $f_m$. These two components will be equal in magnitude but 180° out of phase with each other. One will be caused by the Sagnac phase shift and the other by the stretching of the fiber at the frequency $2f_m$ in the second harmonic phase modulator 138.

Thus, by adjusting the amplitude $\Delta\phi_2$ of the second harmonic driving signal on the line 140 until the error signal on the line 132 drops to zero or substantially zero it is possible to determine what the rotational speed of the loop is by observing the amplitude of the second harmonic driving signal which caused the zero error signal. And this is true even for high rotational speeds which would ordinarily cause Sagnac phase shifts sufficient to bias the curve 146 in Figure 12 out into the second, third or higher lobes of the curve 80. This process of adjusting the second harmonic driving signal amplitude until the output of the lock-in amplifier 46 drops to zero can be done manually as would be required in the open loop embodiment, or it could be done automatically as in the closed loop system.

The overall effect then is to allow a measurement of rotation rates which normally would move the operating points for the resultant phase shift curve out into the ambiguous ranges of the second and higher lobes of the curve 80 in Figure 12, i.e., past the points 95 and 97 on the curve 80 in Figure 12. That is, the invention provides a means to eliminate the ambiguity in the output signal from the detector for higher rotation rates where prior art sensors would not know which of several possible rotation rates was causing the detector output of that particular characteristic. And this increased dynamic range is gained with no loss of sensitivity, because the slope of the sides of the lobes of the curve 80 is not changed.

In the preferred embodiment, the second harmonic phase modulator 138 is located in the loop 14 at a point midway between the location of the first harmonic phase modulator and the center of the loop 14. At this location, the phase modulator 138 operating at $2f_m$ will be at its "proper" frequency location since the frequency is fixed by the location of the phase modulator 38 at $f_m$.

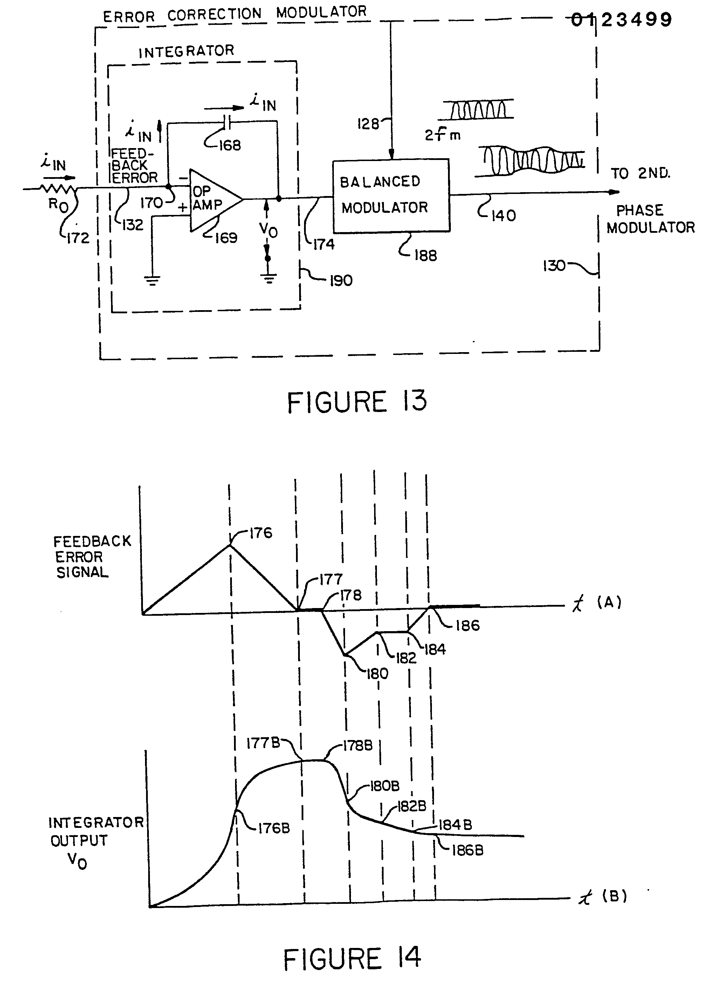

Figure 13 shows one embodiment of the error correction modulator 130. In this embodiment, the error signal on the line 132 is coupled to the inverting input of an operational amplifier connected as an integrator. The exact structural details of practical integrators are well known to those skilled in the art and no further discussion of those details will be given here. As is well known in the art of operational amplifiers, the negative feedback voltage developed across the capacitor tends to keep the point 170 at a virtual ground. That is, the voltage at the point 170 is held at or near zero volts by the negative feedback. However, no current flows to ground through this virtual short. The input current $i_{in}$ to the operational amplifier 169 through the output impedance of the lock-in amplifier 46, represented by the impedance $R_o$ 172, is equal to the output error voltage of the lock-in amplifier 46 divided by its output impedance $R_o$, since the impedance to ground from the point 170 is zero. But since no current flows to ground from the node 170, the input current $i_{in}$ flows through the capacitor 168 and an output voltage $V_0$ relative to ground, builds up on the line 174 as a function of time. The expression for the output voltage $V_0$ as a function of time is:

$$V_0 = - \frac{1}{C} \int i_{in} dt \qquad (11)$$

where C is the value of the capacitor 168.

Referring to Figure 14, there are shown the response characteristics for the operational amplifier integrator 169. Figure 14(A) shows a hypothetical error signal on the line 132. The output voltage $V_0$ of the integrator on the line 174 is plotted in Figure 14(B).

It can be seen from Figure 14(B) that for zero error signals, the output voltage curve has zero slope and for increasing magnitudes of non-zero error signals, the magnitude of the slope of the output voltage curve for $V_0$ increases. That is, the sign of the slope depends upon whether the error signal is positive or negative, and the steepness of the slope at any instant in time depends upon the magnitude of the error signal at that instant in time.

As the error signal increases from the origin to the point 176, the integrator output signal $V_0$ increases to the point 176B. Referring again to Figure 13, a conventional balanced modulator such as an MC1496L, manufactured by Motorola, and associated circuits converts this input voltage $V_0$ on the line 174 to corresponding changes in the envelope of the second harmonic driving signal on the line 140. That is, the modulator 188 amplitude modulates the fixed amplitude second harmonic signal on the line 128 with the signal on the line 174. This second harmonic driving signal on the line 140 is then shifted in phase in the conventional phase shifter 136 in Figure 11 and applied to the second harmonic phase modulator 138.

As the amplitude of the second harmonic driving signal on the line 140 increases, the amplitude of the first harmonic component in the optical output signal caused by the second harmonic phase modulator 138 begins to rise. When it rises far enough, it tends to cancel the first harmonic component caused by the rotation. This tends to reduce the error signal as shown between the points 176 and 177 in Figure 14(A). The decreasing error signal changes the steepness of the slope of the itegrator output voltage $V_0$ in Figure 14(B) as shown between the points 176B and 177B. At the point 177 in Figure 14(A), the magnitude of the second harmonic driving signal is just enough to cancel all of the rotation caused first harmonic component in the optical output, and thus the error signal will be zero. This is reflected by a flat, non-zero portion of the integrator output voltage curve for $V_0$ between the points 177B and 178B.

At the time 178 in this hypothetical situation, the rotation rate of the loop 14 changes such that the error signal changes sign and begins to increase in magnitude as shown between 178 and 180 in Figure 14(A). This causes a decrease in the output voltage $V_0$ because the current $i_{in}$ changes directions and the voltage on the capacitor 168 begins to change. This is shown between the points 178B and 180B in Figure 14(B). The effect is to decrease the amplitude of the second harmonic driving signal which causes the error signal to trend back toward zero as seen between the points 180 and 182 in Figure 14(A).

At the time 182 in the hypothetical situation, the rotation of the loop 14 again changes such that more first harmonic component is generated by the Sagnac phase shift so as to flatten the error signal curve as illustrated between the points 182 and 184. This causes the integrator output voltage to ramp downward at a constant slope to decrease the amplitude of the second harmonic phase modulator between the points 182B and 184B.

At the time 184, the rotation rate of the loop again changes but the error signal is still negative and non-zero. The non-zero error signal causes the integrator output voltage $V_0$ to continue to decrease, thereby changing the amplitude of the second harmonic driving signal and causing the error signal to move toward zero as shown between the points 184 and 186.

Once the error signal reaches zero, the integrator output voltage holds steady at whatever cancellation amplitude cancelled all or substantially all of the Sagnac generated first harmonic component. The situation at the time 186 represents a non-zero constant rotation rate in the loop 14 where the amplitude of the second harmonic driving signal on the line 140 has been adjusted to the proper level to just cancel the Sagnac-generated first harmonic component in the optical output signal. This situation represents operation between the balanced points 150 and 152 in Figure 12.

Those skilled in the art will appreciate that if rotation continues accelerating in one direction, the output voltage $V_0$ could rise above safe levels and cause component failures in, for example, the amplitude modulator 188 for the circuit of Figure 13. To prevent such occurrences, voltage limiting devices should be coupled to the integrator to limit the maximum positive and negative voltage excursions of $V_0$.

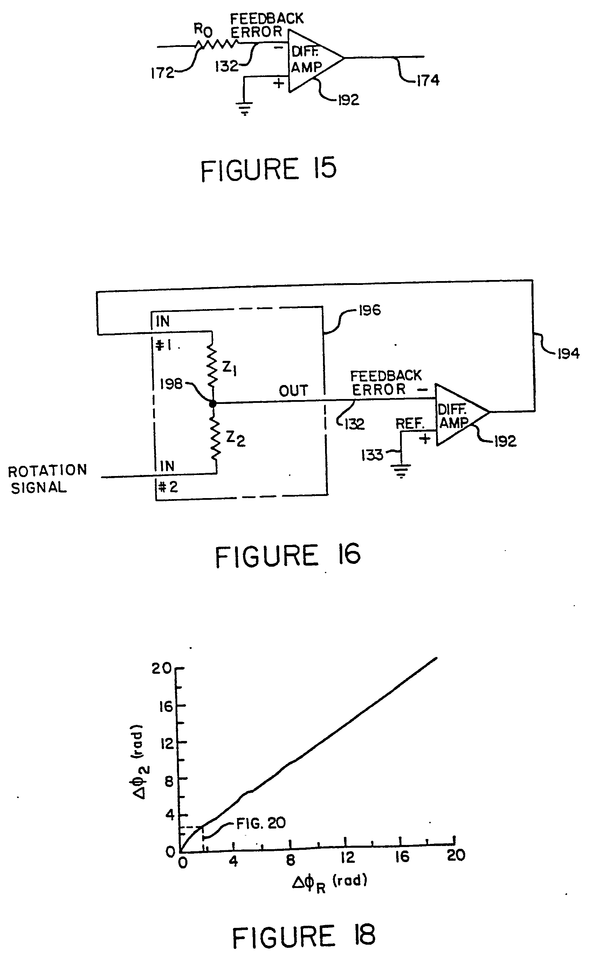

Referring to Figure 15, there is shown the preferred embodiment for a portion of the error-correction modulator circuit 130 to replace the integrator 190 in Figure 13. In this embodiment, a differential amplifier 192 has its inverting input coupled to the error signal on the line 132 and has its output is coupled to the amplitude modulator 188 by the line 174.

The manner in which the system depicted in Figure 15 works is better understood with reference to Figure 16, which depicts the overall rotation sensor in schematic terms with the components in the sensor represented by a three-port network 196 coupled to the differential amplifier 192. The optical portion and most of the electronic components of the sensor have been represented by the voltage divider impedance network 196 which has two inputs coupled to either end of the two impedances $Z_1$ and $Z_2$. The midpoint of this divider is coupled to the inverting input of the differential amplifier 192. When a rotation is applied to the loop, a rotation signal (symbolic) will be applied to the second input of the three port network 196 which results in an error signal being applied to the line 132 coupled to the inverting input of the differential amplifier 192. The difference between this input error signal and the reference signal on the line 133, which in this case is ground potential, is amplified by the differential amplifier 192 and the inverted, amplified difference signal is applied to the output line 194. This output line is also coupled to the first input of the network 196 such that negative feedback occurs through the impedance $Z_1$ tending to cancel the voltage at the point 198 caused by the rotation signal. The signal on the line 194 then tends to minimize the voltage swings at the point 198. The point 198 physically represents the output of the lock-in amplifier 46 in Figure

11. The impedances $Z_1$ and $Z_2$ are virtual impedances representing the overall transfer function and loop gain of the optical and electronic portions of the system.

The time response, phase margin, bandwidth and sensitivity of the system are matters of design choice depending upon the application and standard feedback system analysis can be used to establish system parameters.

The effect of the feedback through the impedance $Z_1$ is to restrict the swings in the error signal on the output line 132 of the lock-in amplifier to a small range represented by the box 200 in Figure 10. The range is a matter of design choice and depends upon the gain of the differential amplifier 192. Higher gain results in a smaller range of variation of the input signal, i.e., a smaller box but less stability.

Any structure which reacts to non-zero error signals so as to reduce the error signal to zero or substantially zero by increasing or decreasing the magnitude of the second harmonic driving signal on the line 140 will suffice for purposes of the invention. For some embodiments it will be desirable to maintain the level of the second harmonic driving signal at the cancellation amplitude and phase relative to the first harmonic driving signal, which reduces the error signal to zero or near zero. The exact circuit used to accomplish this function is not critical to the invention.

An alternative circuit which could be used for the error correction modulator is as shown in Figure 17. In this embodiment, the error signal on the line 132 is coupled to the input of a comparison processor 201. The comparison processor has a reference voltage applied to its reference input 203 which is ground potential in this case. The comparison processor compares the error signal on the line 132 with the reference signal on the line 203 and generates one of three outputs. If the error signal is positive and non-zero, the output line 205 is activated as with a logic one level. If the error signal is negative and non-zero, the line 207 is activated. Finally, if the error signal is equal to the reference signal, the = line 205 is activated.

An up-down counter 211 has its up input coupled to the line 205 and begins counting up from zero when the line 205 is active. The binary count is continually changing the digital pattern on the output bus 213 as the count progresses where the data on the bus 213 at any moment represents the binary representation of the count.

A digital to analog converter continuously or periodically samples the value of the binary count on the bus 213 and converts the digital data to an analog output signal on the line 174. This analog signal is used by the conventional amplitude modulator 188 to amplitude modulate the second harmonic driving signal on the line 128 and apply it to the line 140.

The changing amplitude of the second harmonic driving signal is reflected in a changing error signal on the line 132. That is the error signal will be trending toward the reference signal voltage.

When the error signal reaches the reference voltage, the compareator processor 201 activates the line 209 which is coupled to the stop input of the counter 211, thereby stopping the count. The D/A converter then holds the amplitude level of the second harmonic driving signal steady at the then existing level until the error signal changes again.

When the error signal becomes negative and non-zero, the process repeats itself but the counter 215 starts counting down from zero or from the then existing positive count. If the count was zero when the line 207 was activated, a decoder 217 activates a change sign line 219 which causes the D/A converter to change the sign of the analog output voltage on the line 174. If the count was not zero when the line 207 was activated, the decoder 217 does not activate the line 219, and the D/A converter leaves the analog signal on the line 174 in the same sign as when the line 205 was activated but begins to lower the amplitude as the count decreases. This process continues until the line 209 is activated.

To determine whether the rotation sensor is linear the transfer function relating the amplitude of the second harmonic waveform to the magnitude of the Sagnac phase shift must be derived. Mathematically this is done by deriving the expression for the output optical signal and solving for the first harmonic thereof. The output optical signal can be expressed by substituting the expression for the resultant phase shift shown in Figure 12 as the curve 142 as the argument for the expression of the curve 80 in Figure 12. The curve 80 can be expressed as:

$$P(t) = \frac{P_o}{2} \left(1 + \cos(\Delta\phi)\right) \tag{12}$$

where

$P(t)$=the output optical power as a function of time;

$P_o$=the peak output optical power; and

$\Delta\phi$=the total phase shift between the counter-propagating waves W1 and W2.

Substituting the expression for the curve 142 for $\Delta\phi$ in Equation (12) gives:

$$P(t) = \frac{P_o}{2} \left[1 + \cos\{\Delta\phi_1 \cos(\omega_m t) + \Delta\phi_2 \cos(2\omega_m t) - \Delta\phi_R\}\right] \tag{13}$$

where all terms are defined as used in Equation (12) and Figure 12.

Solving for the first harmonic component of the Fourier transform of Equation (13) gives:

$$P_f(t) \propto \sin(\Delta\phi_R)[J_0(\Delta\phi_2)J_1(\Delta\phi_1)$$
$$+ \sum_{n=1}^{\infty} (-1)^{n+1}J_{2n}(\Delta\phi_2)\{J_{4n-1}(\Delta\phi_1)-J_{4n+1}(\Delta\phi_1)\}] \qquad (14)$$
$$-\cos(\Delta\phi_R)\sum_{n=1}^{\infty}(-1)^{n+1}J_{2n-1}(\Delta\phi_2)\{J_{4n-3}(\Delta\phi_1)-J_{4n-1}(\Delta\phi_1)\}$$

where $J_n$=the Bessel function of the first kind.

Therefore, the relationship between the Sagnac phase shift $\Delta\phi_R$ and the magnitude $\Delta\phi_2$ of the second harmonic phase shift at the frequency $2f_m$ to exactly cancel the first harmonic component in the optical output signal caused by the Sagnac phase shift is:

$$\tan\Delta\phi_R = \frac{\sum_{n=1}^{\infty}(-1)^{n+1}J_{2n-1}(\Delta\phi_2)\{J_{4n-3}(\Delta\phi_1)-J_{4n-1}(\Delta\phi_1)\}}{J_0(\Delta\phi_2)J_1(\Delta\phi_1) + \sum_{n=1}^{\infty}(-1)^{n+1}J_{2n}(\Delta\phi_2)\{J_{4n-1}(\Delta\phi_1)-J_{4n+1}(\Delta\phi_1)\}} \qquad (15)$$

When Equation (15) is plotted, the curve is as illustrated in Figure 18. This curve shows that the sensor is substantially linear for large Sagnac phase shifts but deviates slightly from linearity for small Sagnac phase shifts.

The resultant phase shift curve for a small Sagnac phase shift $\Delta\phi_R$ and a small amplitude second harmonic $\Delta\phi_2$ is shown in Figure 19 as the curve 142. The small "bump" at 202 translates through the curve 80 to the "bump" 204 in the curve 206 for the optical output signal.

The transfer function for Sagnac phase shifts up to 2.5 radians is plotted in Figure 20 versus the amplitude $\Delta\phi_2$ of the second harmonic component needed to cancel the effects of the Sagnac phase shift $\Delta\phi_R$. Figure 20 shows more clearly the distinct curvature in the transfer function in this small Sagnac phase shift region. The dots along the curve in Figure 20 represent experimentally determined data points.

Because the transfer function is non-linear in some regions, linear elements used to translate the amplitude of the second harmonic driving signal to the magnitude of the Sagnac phase shift introduce errors. A device may be used at the output to store the transfer function or to solve the transfer function for the rotation rate or Sagnac phase shift given the cancellation amplitude of the second harmonic driving signal. That is, it is advantageous to convert from the amplitude of the second harmonic driving signal on the line 140 which cancels the first harmonic component in the output due to the Sagnac phase shift to the rotation rate or Sagnac phase shift itself. Such is the purpose of the output display circuit 208 in Figure 11.

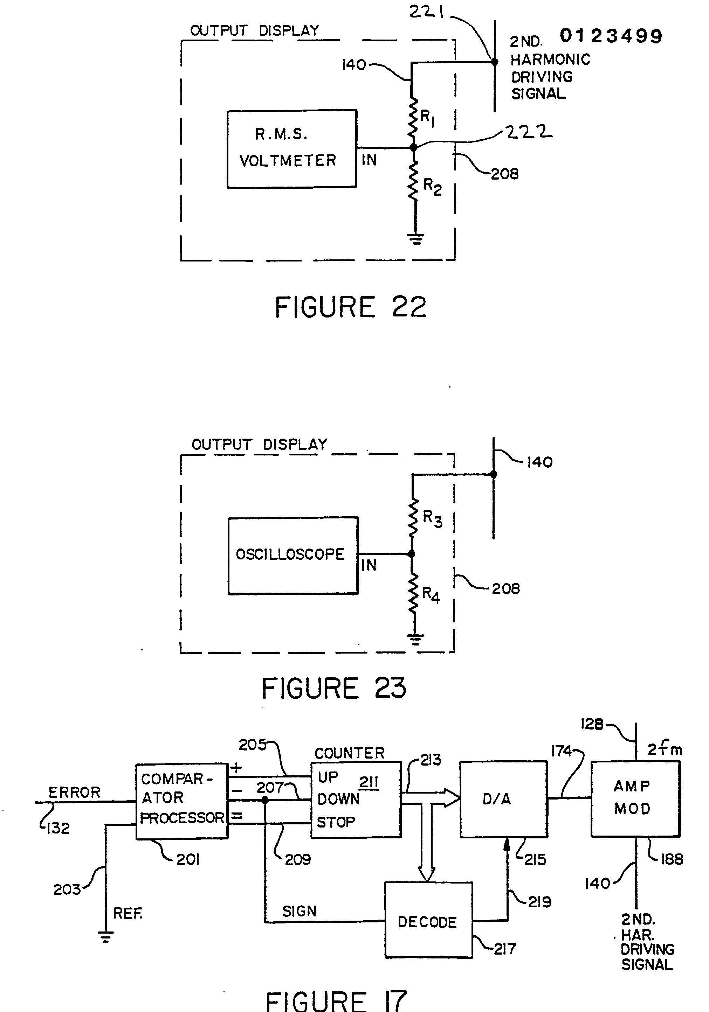

Figure 21 shows the preferred circuit for the output display 208. The second harmonic driving signal on the line 140 is coupled to the input of a lock-in amplifier 210. The lock-in amplifier is tuned to the second harmonic driving signal, i.e., it has as its reference signal the unmodulated second harmonic signal on the line 128 from the frequency doubler 126 in Figure 11. The purpose of the lock-in amplifier 210 is to filter out all noise on the line 140 which clutters the desired second harmonic waveform. This noise can result from noise on the power lines, electromagnetic disturbances, cross talk with the first harmonic driving signal on the line 44 and other miscellaneous sources such as distortion in the frequency multiplier.

The output signal on the line 212 is proportional to the amplitude of the filtered second harmonic driving signal at the output 212 of the lock-in amplifier, and is coupled to an analog to digital (A/D) converter 214 where it is converted to digital data. This data is used by a microprocessor or computer 216 to address a look-up table in a memory 218 which stores digital data regarding the rotation rate which corresponds to each amplitude of the second harmonic driving signal as determined by the transfer function of Equation (15).

The digital data at the output 217 of the A/D converter 214 is used by the microprocessor 216 to access the proper address in the ROM 218 which stores the digital data indicating the corresponding Sagnac phase shift or rotation rate for that particular amplitude of the second harmonic driving signal on the line 140. The program for the microprocessor 216 to perform this addressing function will be apparent to those skilled in the art and any program to perform this function will suffice. The digital data output from the ROM can then be converted to analog form by a digital to analog converter 220 or it can be used in its digital form.

In other embodiments, the microprocessor 216 could be programmed to solve the transfer function of Equation (15) by using the data from the A/D converter 214 as the variable $\Delta\phi_2$. In these embodiments, the ROM 218 would contain the program for performing the calculation required in Equation (15). The exact program used to perform this calculation is not critical, and programs will be known to those skilled in the art to perform this calculation. Any program which can perform this calculation will be adequate for purposes of the invention.

Other embodiments might use an R.M.S. voltmeter instead of the lock-in amplifier 210, but such a structure would lead to errors since any noise on the line 140 might be averaged in and misinterpreted as false amplitude of the second harmonic driving signal. The R.M.S. voltmeter has its input at the midpoint of a voltage divider as shown in Figure 22. The second harmonic driving signal is applied to the node 221 of a voltage divider comprised of the resistors R1 and R2. The resistors R1 and R2 are selected to reflect the slope of the transfer function in the linear region such that for a given amplitude of second harmonic driving signal at the node 221 a signal having an amplitude proportional to the rotation rate will be developed at the node 222. This signal is coupled to the input of an R.M.S. voltmeter to be read as the Sagnac phase shift or rotation rate.

Further, an oscilloscope could also be used instead of an R.M.S. voltmeter, as shown in Figure 23, to detect the amplitude of the second harmonic driving signal. Again a linear scaling network comprised of the resistors R3 and R4 to scale the input to the oscilloscope. The embodiments of Figures 22 and 23 are most accurate in the linear regions of the transfer function.

Any other device capable of measuring waveforms at the second harmonic frequency could also be used for the output display circuit 208. For example, analog curve matching devices could be used to compensate for the transfer function curve and give an output proportional to the rotation rate. Further, the ROM look-up table and microprocessor of Figure 21 could be dispensed with in the approximately linear regions of the transfer function curve such that a simplified Figure 21 embodiment could also be used in the approximately linear region for an approximate result.

The open loop embodiment of Figure 24 works in the same fashion as the closed loop embodiment of Figure 11 except that there is no feedback.

Referring to Figure 24, the basic structure for this two harmonic, open-loop structure is the same as shown in Figure 1 except for one variance. That is that the AC generator 40 generates a driving signal for the phase modulator 38 which has a first harmonic component at the frequency $f_m$ and a second harmonic component at the frequency $2f_m$. The effect of the second harmonic component is the same as described above with respect to Figure 11. All the other components in the embodiment of the invention depicted in Figure 24 are the same structure and have the same function as their counterparts in Figure 1. The AC generator 40, however, is slightly modified such that the magnitude of the second harmonic component can be controlled manually to an amplitude sufficient to cancel the component in the optical output signal at the first harmonic frequency caused by the rotation.

The method of the invention for detecting the rotation rate of the loop includes the steps of causing counterpropagating light waves in the loop to be phase modulated at a first harmonic frequency of $f_m$. The amplitude of the first harmonic component at the frequency $f_m$ is then detected in the optical output signal of the loop. The counterpropagating light waves are then phase modulated at the second harmonic frequency, i.e., $2f_m$, at an amplitude sufficient to cancel the first harmonic component in the optical output signal caused by rotation.

More precisely, the amplitude of the first harmonic component of the optical output signal is converted to a D.C. error signal proportional thereto. The error signal is then used to control the amplitude of a second harmonic driving signal for a second harmonic phase modulator in the loop. The level of the second harmonic driving signal is then increased or decreased until the error signal indicates a substantially zero amplitude level for the first harmonic component in the optical output signal. The amplitude of the second harmonic driving signal which reduced the amplitude of the first harmonic component in the optical output signal to zero is a measure of the rotation rate of the loop.

The method of calculating the rotation rate of the Sagnac effect rotation sensor comprises sensing the amplitude of the first harmonic component in the optical output signal of the sensor at the first frequency at which the first phase modulator is operating. The counter-propagating light waves in the rotation sensor are then phase modulated at a second frequency which should be, in the preferred embodiment, an exact harmonic of the first frequency. Other second frequencies can cause time variant components in the error signal which significantly affect the stability of the loop causing drift and "hunt". The amplitude and phase of the second frequency phase modulation is adjusted relative to the first frequency phase modulation so as to cancel the component of the optical output signal at the first frequency. The characteristics of the phase modulation at the second frequency and at the cancellation amplitude are then converted through a transfer function to the corresponding rotation rate.

## Claims

1. An apparatus for sensing rotation of an optical loop (14) wherein light waves may be counter-propagated, said light waves having first phase modulation at a first frequency caused by a first phase modulator (38), said light waves combined to form an optical output signal, characterized by:

a detecting circuit (30, 46) for detecting the first frequency component of the optical output signal corresponding to the rotation rate; and

a second phase modulator (138) for causing phase modulation of the light waves at a second frequency at an amplitude sufficient to substantially cancel the first frequency component.

2. An apparatus as defined in Claim 1 wherein the detecting circuit (30, 46) is characterized by a photodetector (30) electrically connected to the input of a lock-in amplifier (46) which is tuned to the first frequency, and which converts the amplitude of the first frequency component to a feedback error signal.

3. An apparatus as defined in Claim 2 is further characterized by an error correction modulator (130) which varies the amplitude of the second frequency phase modulation of the second phase modulator (138) in response to the feedback error signal.

4. An apparatus as defined in Claim 3 wherein the error correction modulator (130) responds to non-zero feedback error signals by increasing or decreasing the amplitude of the second frequency phase modulation to reduce the amplitude of the feedback error signal to substantially zero.

5. An apparatus as defined in Claim 4 wherein the error correction modulator (130) is characterized by:

an integrating operational amplifier (169) with the feedback error signal coupled to the inverting input of said operational amplifier (169); and

an amplitude modulator (188) electrically connected to the output of the operational amplifier (169).

6. An apparatus as defined in Claim 4 wherein the error correction modulator (130) is characterized by:

a summing differential amplifier (192) with the feedback error signal as its input; and

an amplitude modulator (188) electrically connected to the output of the differential amplifier (192).

7. An apparatus as defined in Claim 4 is further characterized by a generator (40) which provides signals which drive the first phase modulator (38) at a first frequency and the second phase modulator (138) at a second frequency which is a harmonic of the first frequency.

8. An apparatus as defined in Claim 7 wherein the signal generator (40) provides a signal at the first frequency, and wherein the apparatus is further characterized by a frequency multiplier (126) to provide the signal at the second frequency, and a phase shift circuit (136) to shift the relative phase of the second frequency signal, such that the maxima of the second frequency signal correspond in time to the maxima of the first frequency signal.

9. An apparatus as defined in Claim 1, further characterized by an output circuit (208) responsive to the amplitude of the second frequency phase modulation and which provides a signal corresponding to the rotation rate.

10. An apparatus as defined in Claim 9 wherein an output of the output circuit (208) corresponds to the amplitude of the second frequency phase modulation driving signal needed to cancel the first frequency component detected by the detecting circuit (30, 46).

11. An apparatus as defined in Claim 9 wherein the output circuit (208) applies a transfer function to the amplitude of the second frequency modulation to translate the second frequency modulation to a rotation signal.

12. An apparatus as defined in Claim 11 wherein the output circuit (208) includes a data storage device (218) for storing rotation data related by the transfer function to the amplitude of the second frequency phase modulation.

13. An apparatus as defined in Claim 9 wherein the output circuit (208) is characterized by a processing device (216) which solves the equation:

$$\tan \Delta\phi_R = \frac{\sum_{n=1}^{\infty} (-1)^{n+1} J_{2n-1}(\Delta\phi_2)\{J_{4n-3}(\Delta\phi_1) - J_{4n-1}(\Delta\phi_1)\}}{J_0(\Delta\phi_2)J_1(\Delta\phi_1) + \sum_{n=1}^{\infty} (-1)^{n+1} J_{2n}(\Delta\phi_2)\{J_{4n-1}(\Delta\phi_1) - J_{4n+1}(\Delta\phi_1)\}} \qquad (15)$$

where:

$\Delta\phi_R$=the Sagnac phase shift caused by rotation;

$\Delta\phi_1$=the amplitude of the first frequency phase modulation;

$\Delta\phi_2$=the amplitude of the second frequency modulation;

$J_x$=the Bessel function of the first kind defining the harmonic of x times the first frequency.

14. An apparatus as defined in Claim 13 wherein the output circuit (208) is further characterized by a lock-in amplifier (210) for detecting the amplitude of the second frequency modulation required to cancel the first frequency component and for generating an output signal responsive thereto, and is further characterized by an analog-to-digital converter circuit (214) for converting the output of the lock-in amplifier (210) to digital data.

15. An apparatus as defined in Claim 14 wherein the processing device (216) responds to the digital data from the analog-to-digital converter circuit (214) by generating an address to a data storage device (218) and said data storage device (218) responds with corresponding rotation data.

16. A method of detecting the rotation rate of an optical loop wherein light waves may be counter-propagated, said light waves being phase modulated at a first frequency, characterized by comprising the steps of:

combining said counter-propagating light waves to produce a combined light wave having a first frequency component caused by the rotation of the optical loop;

detecting the amplitude of the first frequency component of said combined wave; and

phase modulating the counter-propagating light waves with a second frequency signal at an amplitude sufficient to substantially cancel the first frequency component in the combined wave.

17. A method of detecting the rotation rate of an optical loop as defined in Claim 16 further characterized by further comprising the steps of:

converting the detected amplitude of the first frequency component of the combined wave to a feedback error signal;

amplitude modulating the second frequency signal in response to the feedback error signal;

applying the amplitude modulated second frequency signal to a phase modulator in the optical loop.

18. A method for detecting the rotation rate of an optical loop as defined in Claim 17 wherein the second frequency signal is a harmonic of the first frequency.

19. A method for detecting the rotation of an optical loop as defined in Claim 18 further including the step of shifting the phase of the second frequency signal such that the maxima of the second frequency signal correspond in time to the maxima of the first frequency modulation.

20. A method of detecting the rotation rate of an optical loop as defined in Claim 17 further characterized by the step of increasing and decreasing the amplitude of the second frequency signal until the feedback error signal indicates a substantially zero amplitude level for the detected first frequency component.

21. A method of detecting the rotation rate of an optical loop as defined in Claim 20 further characterized by the step of converting, through a transfer function, the amplitude of the second frequency signal to the corresponding rotation rate of the optical loop which caused the first frequency component in the combined wave.

22. A method of detecting the rotation rate of an optical loop as defined in Claim 21 further characterized by the steps of:

converting the amplitude of the second frequency signal to an address in a memory storing data defining the corresponding rotation rate for the particular second frequency signal amplitude; and

retrieving the data stored at that address.

23. A method of detecting the rotation rate of an optical loop as defined in Claim 22 wherein the conversion step is characterized by setting the amplitude of the second frequency signal as the variable $\Delta\phi_2$ and the amplitude of the first frequency phase modulation as $\Delta\phi_1$ and solving for $\Delta\phi_R$, the Sagnac phase shift caused by rotation, in the following equation:

$$\tan \Delta\phi_R = \frac{\sum_{n=1}^{\infty} (-1)^{n+1} J_{2n-1}(\Delta\phi_2)\{J_{4n-3}(\Delta\phi_1) - J_{4n-1}(\Delta\phi_1)\}}{J_0(\Delta\phi_2)J_1(\Delta\phi_1) + \sum_{n=1}^{\infty} (-1)^{n+1} J_{2n}(\Delta\phi_2)\{J_{4n-1}(\Delta\phi_1) - J_{4n+1}(\Delta\phi_1)\}}$$

where $J_x$ equals the Bessel function of the first kind defining the harmonic of x times the first frequency.

## Patentansprüche

1. Apparat zur Erfassung von Drehbewegungen einer optischen Schleife (14), in der sich Lichtwellen gegenläufig ausbreiten können, die Lichtwellen eine erste Phasenmodulation bei einer ersten Frequenz haben, die durch einen ersten Phasenmodulator (38) herbeigeführt wird, und die Lichtwellen zur Bildung eines optischen Ausgangssignals vereint sind, gekennzeichnet durch

einen Nachweisschaltkreis (30, 46) zum Nachweis der ersten Frequenzkomponente des optischen Ausgangssignals, welches der Drehzahl entspricht, und

einen zweiten Phasenmodulator (138) zur Erzeugung einer Phasenmodulation der Lichtwellen bei einer zweiten Frequenz mit einer Amplitude, die ausreicht, um die erste Frequenzkomponente im wesentlichen auszulöschen.

2. Apparat nach Anspruch 1, wobei der Nachweisschaltkreis (30, 46) durch einen Photodetektor (30) gekennzeichnet ist, der elektrisch an den Eingang eines Lock-in Verstärkers (46) angeschlossen ist, der auf die erste Frequenz abgestimmt ist und der die Amplitude der ersten Frequenzkomponente in ein Abweichungssignal zur Selbstregulierung umwandelt.

3. Apparat nach Anspruch 2, gekennzeichnet durch einen zusätzlichen abweichungskorrigierenden Modulator (130), der die Amplitude der zweiten Frequenz der Phasenmodulation des zweiten Phasenmodulators (138) in Abhängigkeit von dem Abweichungssignal zur Selbstregulierung verändert.

4. Apparat nach Anspruch 3, dadurch gekennzeichnet, daß der abweichungskorrigierende Modulator (130) auf ein von Null verschiedenes Abweichungssignal zur Selbstregulierung anspricht, indem die Amplitude der zweiten Frequenz der Phasenmodulation erhöht oder erniedrigt wird, um die Amplitude des Abweichungssignals zur Selbstregulierung im wesentlichen auf Null zu reduzieren.

5. Apparat nach Anspruch 4, wobei der abweichungskorrigierende Modulator (130) gekennzeichnet ist, durch einen integrierenden Operationsverstärker (169), bei dem das Abweichungssignal zur Selbstregulierung an den invertierenden Eingang des Operationsverstärkers (169) angelegt ist, und einen Amplitudenmodulator (188), der elektrisch an den Ausgang des Operationsverstärkers (169) angeschlossen ist.

6. Apparat nach Anspruch 4, wobei der abweichungskorrigierende Modulator (130) gekennzeichnet ist, durch einen summierenden Differenzverstärker (192) mit dem Abweichungssignal zur Selbstregulierung als sein Eingang; und einen Amplitudenmodulator (188), der elektrisch an dem Ausgang des Differenzverstärkers (192) angeschlossen ist.

7. Apparat nach Anspruch 4, gekennzeichnet durch einen Generator (40), der Signale zur Verfügung stellt, die den ersten Phasenmodulator (38) bei einer ersten Frequenz und den zweiten Phasenmodulator (138) bei einer zweiten Frequenz, welche eine Oberwelle der ersten Frequenz ist, betreiben.

8. Apparat nach Anspruch 7, wobei der Signalgenerator (40) ein Signal bei der ersten Frequenz zur Verfügung stellt, und der Apparat weiter gekennzeichnet ist durch einen Frequenzvervielfacher (126) zur Signalversorgung bei der zweiten Frequenz, und einen phasenschiebenden Schaltkreis (136) um die relative Phase des zweiten Frequenzsignals so zu verschieben, daß die Maxima des zweiten Frequenzsignals zeitlich mit den Maxima des ersten Frequenzsignals korrespondieren.

9. Apparat nach Anspruch 1, gekennzeichnet durch einen Ausgangsschaltkreis (208), der auf die Amplitude der zweiten Frequenzphasenmodulation reagiert und ein der Drehzahl entsprechendes Signal zur Verfügung stellt.

10. Apparat nach Anspruch 9, dadurch gekennzeichnet, daß ein Ausgang des Ausgangsschaltkreises (208) der Amplitude des Signals entspricht, welches die zweite Frequenzphasenmodulation steuert, die gebraucht wird, um die erste Frequenzkomponente, die vom Nachweisschaltkreis (30, 46) nachgewiesen wird, auszulöschen.

11. Apparat nach Anspruch 9, dadurch gekennzeichnet, daß der Ausgangsschaltkreis (208) eine Transferfunktion auf die Amplitude der zweiten Frequenzmodulation anwendet, um die zweite Frequenzmodulation in ein Rotationssignal umzuwandeln.

12. Apparat nach Anspruch 11, dadurch gekennzeichnet, daß der Ausgangsschaltkreis (208) eine datenspeichernde Einrichtung (218) einschließt, um Rotationsdaten zu speichern, die durch die Transferfunktion mit der Amplitude der zweiten Frequenzphasenmodulation verknüpft sind.

13. Apparat nach Anspruch 9, bei dem der Ausgangsschaltkreis (208) durch eine verarbeitende Einrichtung gekennzeichnet ist, die die folgende Gleichung löst:

$$\tan \Delta\phi_R = \frac{\sum\limits_{n=1}^{\infty} (-1)^{n+1} J_{2n-1}(\Delta\phi_2)\{J_{4n-3}(\Delta\phi_1) - J_{4n-1}(\Delta\phi_1)\}}{J_0(\Delta\phi_2)J_1(\Delta\phi_1) + \sum\limits_{n=1}^{\infty} (-1)^{n+1} J_{2n}(\Delta\phi_2)\{J_{4n-1}(\Delta\phi_1) - J_{4n+1}(\Delta\phi_1)\}}$$

Dabei ist

$\Delta\phi_R$ = die Sagnacphasenverschiebung verursacht durch die Rotation;

$\Delta\phi_1$ = die Amplitude der ersten Frequenzphasenmodulation;

$\Delta\phi_2$ = die Amplitude der zweiten Frequenzmodulation;

$J_x$ = die Besselfunktion erster Art, die die Oberwelle von x-mal der ersten Frequenz kennzeichnet.

14. Apparat nach Anspruch 13, wobei der Ausgangsschaltkreis (208) gekennzeichnet ist, durch einen Lock-in Verstärker (210) zum Ermitteln der Amplitude der zweiten Frequenzmodulation, die benötigt wird, um die erste Frequenzkomponente auszulöschen und um ein darauf reagierendes Ausgangssignal zu erzeugen, und durch einen Analog-Digital-Wandler (214) um den Ausgang des Lock-in Verstärkers (210) in digitale Daten zu verwandeln.

15. Apparat nach Anspruch 14, dadurch gekennzeichnet, daß die verarbeitende Einrichtung (216) auf die digitalen Daten vom Analog-Digital-Wandler (214) anspricht, wobei eine Adresse zu einer Datenspeichereinheit (218) erzeugt wird und die Datenspeichereinheit (218) die entsprechenden Rotationsdaten ausgibt.

16. Verfahren zur Erfassung der Drehzahl einer optischen Schleife, in der Lichtwellen sich entgegengesetzt ausbreiten können und die Lichtwellen durch eine erste Frequenz phasenmoduliert sind, dadurch gekennzeichnet, daß es folgende Schritte enthält:

Kombination der sich entgegengesetzt ausbreitenden Lichtwellen, um eine kombinierte Lichtwelle zu bilden, die eine Komponente der ersten Frequenz hat, welche durch die Rotation der optischen Schleife verursacht ist;

Nachweis der Amplitude der ersten Frequenzkomponente der kombinierten Welle; und

Phasenmodulation der sich entgegengesetzt ausbreitenden Lichtwellen mit einem zweiten Frequenzsignal mit einer Amplitude, die ausreicht, die erste Frequenzkomponente in der kombinierten Welle auszulöschen.

17. Verfahren zur Erfassung der Drehzahl einer optischen Schleife nach Anspruch 16, dadurch gekennzeichnet, daß die folgenden Schritte enthalten sind:

Umwandlung der erfaßten Amplitude der esten Frequenzkomponente der kombinierten Welle in ein Abweichungssignal zur Selbstregulierung;

Amplitudenmodulation des zweiten Frequenzsignals in Abhängigkeit vom Abweichungssignal zur Selbstregulierung;

Anlegen des amplitudenmodulierten zweiten Frequenzsignals an einen Phasenmodulator in der optischen Schleife.

18. Verfahren zur Erfassung der Drehzahl einer optischen Schleife nach Anspruch 17, dadurch gekennzeichnet, daß die zweite Frequenz eine Oberwelle der ersten Frequenz ist.

19. Verfahren zur Erfassung der Drehbewegung einer optischen Schleife nach Anspruch 18, dadurch gekennzeichnet, daß ein Schritt enthalten ist, mit der die Phase des zweiten Frequenzsignals so verschoben wird, daß die Maxima des zweiten Frequenzsignals zeitlich zu den Maxima der ersten Frequenzmodulation korrespondieren.

20. Verfahren zur Erfassung der Drehzahl einer optischen Schleife nach Anspruch 17, gekennzeichnet durch einen Schritt, der die Amplitude des zweiten Frequenzsignals erhöht und erniedrigt, bis das Abweichungssignal zur Selbstregulierung eine Amplitudenhöhe im wesentlichen von Null für die nachgewiesene erste Frequenzkomponent anzeigt.

21. Verfahren zur Erfassung der Drehzahl einer optischen Schleife nach Anspruch 20, gekennzeichnet durch einen Schritt, der die Amplitude des zweiten Frequenzsignals mittels einer Übertragungsfunktion in die entsprechende Drehzahl der optischen Schleife, die die erste Frequenzkomponente der vereinigten Welle verursacht, umwandelt.

22. Verfahren zur Erfassung der Drehzahl einer optischen Schleife nach Anspruch 21, gekennzeichnet durch Schritte, die die Amplitude des zweiten Frequenzsignals in eine Adresse eines Datenspeichers umwandeln, der die, die entsprechende Drehzahl bestimmenden Daten für das betreffende zweite Frequenzsignal speichert und an dieser Adresse gespeicherten Daten gewinnt.

23. Verfahren zur Erfassung der Drehzahl einer optischen Schleife nach Anspruch 22, wobei der Umwandlungsschritt dadurch gekennzeichnet ist, daß die Amplitude des zweiten Frequenzsignals als Variable $\Delta\phi_2$ und die Amplitude der ersten Frequenzphasenmodulation als $\Delta\phi_1$ gesetzt wird und in der folgenden Gleichung für $\Delta\phi_R$, der Sagnacphasenverschiebung, die durch die Drehung verursacht wird, aufgelöst wird:

$$\tan \Delta\phi_R = \frac{\sum_{n=1}^{\infty} (-1)^{n+1} J_{2n-1}(\Delta\phi_2)\{J_{4n-3}(\Delta\phi_1) - J_{4n-1}(\Delta\phi_1)\}}{J_0(\Delta\phi_2)J_1(\Delta\phi_1) + \sum_{n=1}^{\infty} (-1)^{n+1} J_{2n}(\Delta\phi_2)\{J_{4n-1}(\Delta\phi_1) - J_{4n+1}(\Delta\phi_1)\}}$$

wobei $J_x$ gleich der Besselfunktion der ersten Art ist, und die Oberwelle von x mal der ersten Frequenz bestimmt.

**Revendications**

1. Appareil de détection de la rotation d'une boucle optique (14) dans laquelle des ondes de lumière peuvent se propager dans des directions contraires, lesdites ondes de lumière ayant une première modulation de phase à une première fréquence produite par un premier modulateur de phase (38), lesdites ondes de lumière étant combinées de façon à former un signal de sortie optique, caractérisé par:

un circuit de détection (30, 46) pour détecter la composante de la première fréquence du signal de sortie optique correspondant au taux de rotation; et

un second modulateur de phase (138) pour produire la modulation de phase des ondes de lumière à une seconde fréquence à une amplitude suffisante pour essentiellement annuler la composante de la première fréquence.

2. Appareil tel qu'il est défini dans la revendication 1, dans lequel le circuit de détection (30, 46) est caractérisé par un photodétecteur (30) connecté électriquement à l'entrée d'un amplificateur à verrouillage qui est ajusté à la première fréquence, et qui convertit l'amplitude de la composante de la première fréquence en un signal d'erreur de rétroaction.

3. Appareil tel qu'il est défini dans la revendication 2, caractérisé en outre par un modulateur de correction d'erreur (130) qui fait varier l'amplitude de la seconde modulation de phase de la seconde fréquence du second modulateur de phase (138) en réponse au signal d'erreur de rétroaction.

4. Appareil tel qu'il est défini dans la revendication 3, dans lequel le modulateur de correction d'erreur (130) est sensible à des signaux de rétroaction non nuls par l'augmentation ou la diminution de l'amplitude de la modulation de phase de la seconde fréquence de façon à réduire l'amplitude du signal d'erreur de rétroaction à essentiellement zéro.

5. Appareil tel qu'il est défini dans la revendication 4, dans lequel le modulateur de correction d'erreur (130) est caractérisé par:

un amplificateur opérationnel intégrateur (169), le signal d'erreur de rétroaction étant couplé à l'accès d'entrée inverseur dudit amplificateur opérationnel (169); et

un modulateur d'amplitude (188) électriquement connecté à la sortie de l'amplificateur opérationnel (169).

6. Appareil tel qu'il est défini dans la revendication 4, dans lequel le modulateur de correction d'erreur (130) est caractérisé par:

un amplificateur différentiel de sommation (192) ayant le signal d'erreur de rétroaction à son entrée; et

un modulateur d'amplitude (188) électriquement connecté à la sortie de l'amplificateur différentiel (192).

7. Appareil tel qu'il est défini dans la revendication 4, caractérisé en outre par un générateur (40) qui fournit des signaux qui commandent le premier modulateur de phase (38) à une première fréquence et le second modulateur de phase (138) à une seconde fréquence qui est une harmonique de la première fréquence.

8. Appareil tel qu'il est défini dans la revendication 7, dans lequel le générateur de signaux (40) produit un signal à la première fréquence, et dans lequel l'appareil est caractérisé en outre par un multiplicateur de fréquence (126) de façon à produire le signal à la seconde fréquence, et un circuit de décalage de phase (136) pour décaler la phase relative du second signal de fréquence, de telle sorte que les maxima du signal à la seconde fréquence correspondent en temps aux maxima du signal à la première fréquence.

9. Appareil tel qu'il est défini dans la revendication 1, caractérisé en outre par un circuit de sortie (208) sensible à l'amplitude de la modulation de phase à la seconde fréquence et qui produit un signal correspondant au taux de rotation.

10. Appareil tel qu'il est défini dans la revendication 9, dans lequel une sortie du circuit de sortie (208) correspond à l'amplitude du signal de commande de modulation de phase à la seconde fréquence nécessaire pour annuler la composante à la première fréquence détectée par le circuit de détection (30, 46).

11. Appareil tel qu'il est défini dans la revendication 9, dans lequel le circuit de sortie (208) applique une fonction de transfert à l'amplitude de la modulation à la seconde fréquence de façon à transmettre la modulation à la seconde fréquence au signal de rotation.

12. Appareil tel qu'il est défini dans la revendication 11, dans lequel le circuit de sortie (208) comprend un dispositif de stockage des données (218) pour emmagasiner les données de rotation se rapportant par la fonction de transfert à l'amplitude de la modulation de phase à la seconde fréquence.

13. Appareil tel qu'il est défini dans la revendication 9, dans lequel le circuit de sortie (208) est caractérisé par un dispositif de traitement (216) qui résout l'équation:

$$\tan \Delta\phi_R = \frac{\sum_{n=1}^{\infty} (-1)^{n+1} J_{2n-1}(\Delta\phi_2)\{J_{4n-3}(\Delta\phi_1) - J_{4n-1}(\Delta\phi_1)\}}{J_0(\Delta\phi_2)J_1(\Delta\phi_1) + \sum_{n=1}^{\infty} (-1)^{n+1} J_{2n}(\Delta\phi_2)\{J_{4n-1}(\Delta\phi_1) - J_{4n+1}(\Delta\phi_1)\}}$$

où:

$\Delta\phi_R$ = le décalage de phase de Sagnac produit par la rotation;

22

$\Delta\phi_1$=l'amplitude de la modulation de phase à la première fréquence;

$\Delta\phi_2$=l'amplitude de la modulation à la seconde fréquence;

$J_x$=la fonction de Bessel du premier ordre définissant l'harmonique de x fois la première fréquence.

14. Appareil tel qu'il est défini dans la revendication 13, dans lequel le circuit de sortie (208) est en outre caractérisé par un amplificateur de verrouillage (210) pour détecter l'amplitude de la modulation à la seconde fréquence nécessaire pour annuler la composante à la première fréquence et pour produire un signal de sortie qui y est sensible, et est un outre caractérisé par un circuit convertisseur analogue-digital (214) pour convertir la sortie de l'amplificateur de verrouillage (210) en données digitales.

15. Appareil tel qu'il est défini dans la revendication 14, dans lequel le dispositif de traitement (216) est sensible aux données digitales provenant du circuit convertisseur analogue-digital (214) en produisant une adresse au dispositif de stockage des données (218) et dans lequel ledit dispositif de stockage des données (218) est sensible aux données correspondantes de rotation.

16. Méthode de détection du taux de rotation d'une boucle optique dans laquelle des ondes de lumière peuvent se propager dans des directions contraires, lesdites ondes de lumière étant modulées en phase à une première fréquence, caractérisée par les étapes suivantes:

combiner lesdites ondes se propageant dans des directions contraires de façon à produire un onde de lumière combinée ayant une composante à une première fréquence provoquée par la rotation de la boucle optique;

détecter l'amplitude de la composante à la première fréquence de ladite onde combinée; et

moduler en phase les ondes de lumière se propagent dans des directions contraires à l'aide d'un signal à une seconde fréquence à une amplitude suffisante pour essentiellement annuler la composante à la première fréquence dans l'onde combinée.

17. Méthode de détection du taux de rotation d'une boucle optique telle qu'elle est définie dans la revendication 16, caractérisée par les étapes suivantes:

convertir l'amplitude détectée de la composante à la première fréquence de l'onde combinée en un signal d'erreur de rétroaction;

moduler en amplitude le signal à la seconde fréquence en réponse au signal d'erreur de rétroaction;

appliquer le signal à la seconde fréquence modulé en amplitude à un modulateur de phase dans la boucle optique.

18. Méthode de détection du taux de rotation d'une boucle optique telle qu'elle est définie dans la revendication 17, dans laquelle le signal à la seconde fréquence est une harmonique de la première fréquence.

19. Méthode de détection du taux de rotation d'une boucle optique telle qu'elle est définie dans la revendication 18, comprenant en outre l'étape consistant en un décalage de la phase du signal à la seconde fréquence de telle sorte que les maxima du signal à la seconde fréquence correspondent en temps aux maxima de la modulation à la première fréquence.

20. Méthode de détection du taux de rotation d'une boucle optique telle qu'elle est définie dans la revendication 17, caractérisée par l'étape consistant en augmentant au diminuant l'amplitude du signal à la seconde fréquence jusqu'à ce que le signal d'erreur de rétroaction indique un niveau d'amplitude essentiellement nul pour la composante à la première fréquence détectée.

21. Méthode de détection du taux de rotation d'une boucle optique telle qu'elle est définie dans la revendication 20, caractérisée par l'étape consistant à convertir, à l'aide d'une fonction de transfert, l'amplitude du signal à la seconde fréquence en un taux de rotation correspondant de la boucle optique qui a produit la composante à la première fréquence dans l'onde combinée.

22. Méthode de détection du taux de rotation d'une boucle optique telle qu'elle est définie dans la revendication 16, caractérisée par les étapes suivantes:

convertir l'amplitude du signal à la seconde fréquence en une adresse dans une mémoire d'emmagasinage des données définissant le taux de rotation correspondant pour l'amplitude du signal à la seconde fréquence particulière; et

retrouver les données emmagasinées à cette adresse.

23. Méthode de détection du taux de rotation d'une boucle optique telle qu'elle est définie dans la revendication 22, dans laquelle l'étape de conversion est caractérisée en ce que l'amplitude du signal à la seconde fréquence est fixée à la valeur de la variable $\Delta\phi_2$ et l'amplitude de la modulation de phase à la première fréquence est fixée à la valeur $\Delta\phi_1$ et en ce que l'équation suivante est résolue pour $\Delta\phi_R$, le décalage de phase Sagnac produit par la rotation:

$$\tan \Delta\phi_R = \frac{\sum_{n=1}^{\infty} (-1)^{n+1} J_{2n-1}(\Delta\phi_2)\{J_{4n-3}(\Delta\phi_1) - J_{4n-1}(\Delta\phi_1)\}}{J_0(\Delta\phi_2)J_1(\Delta\phi_1) + \sum_{n=1}^{\infty} (-1)^{n+1} J_{2n}(\Delta\phi_2)\{J_{4n-1}(\Delta\phi_1) - J_{4n+1}(\Delta\phi_1)\}}$$

où $J_x$ est la fonction de Bessel du premier ordre définissant l'harmonique de x fois la première fréquence.

Fig. 1

*Fig. 2*

*Fig. 3*

*Fig. 4*

## Fig. 5

## Fig. 6

Fig. 7

INTENSITY
MEASURED
BY DETECTOR

ZERO ROTATION
CASE

Fig. 8

4

Fig. 9

PHASE MODULATED AT $f_m$
WITH CONSTANT ROTATIONAL
VELOCITY

Fig. 10

FIGURE 24

FIGURE 11

6

EP 0 123 499 B1

$$\Delta\phi_1 \cos(\omega_m t) + \Delta\phi_2 \cos(2\omega_m t) - \Delta\phi_R$$

$$\Delta\phi_2 \cos(2\omega_m t)$$

$$\Delta\phi_1 \cos(\omega_m t)$$

FIGURE 12

FIGURE 19

7

FIGURE 13

FIGURE 14

8

FIGURE 15

FIGURE 16

FIGURE 18

**FIGURE 22**

OUTPUT DISPLAY

R.M.S. VOLTMETER — IN

$R_1$

$R_2$

221

2ND. **0 1 2 3 4 9 9** HARMONIC DRIVING SIGNAL

140

222

208

**FIGURE 23**

OUTPUT DISPLAY

OSCILLOSCOPE — IN

$R_3$

$R_4$

140

208

**FIGURE 17**

ERROR
132

COMPARATOR PROCESSOR
201

REF.
203

+
−
=

205
207

COUNTER
UP
DOWN
STOP
211

209

SIGN

213

DECODE
217

215
219

D/A

174

128

2 $f_m$

AMP MOD

188

140

2ND. HAR. DRIVING SIGNAL

10

FIGURE 20

FIGURE 21